# EUROPEAN PATENT APPLICATION

(11) **EP 4 804 286 A1**
(43) Date of publication of application: **09.09.2026**
(21) Application number: 24916407.0
(22) Date of filing: 30.08.2024
(51) Int. Cl.: H01M 10/0587

(54) **WINDING NEEDLE, WINDING DEVICE, AND BATTERY PROCESSING SYSTEM**

(30) Priority: 11.01.2024 CN 202410043912; 11.01.2024 CN 202420072183 U; 07.05.2024 CN 202420969109 U
(71) Applicant: Contemporary Amperex Technology Co., Limited, Ningde, Fujian 352100 (CN)
(72) Inventor: LUO, Zhongping, Ningde, Fujian 352100 (CN); CHEN, Yan, Ningde, Fujian 352100 (CN); LIN, Wenfa, Ningde, Fujian 352100 (CN); TANG, Minghao, Ningde, Fujian 352100 (CN); ZHANG, Shengwu, Ningde, Fujian 352100 (CN); LI, Zhibin, Ningde, Fujian 352100 (CN)
(74) Representative: Lorenz Seidler Gossel Part. mbB
(86) International application number: PCT/CN2024/116112
(87) International publication number: WO 2025/148355

(57) **Abstract**

Disclosed in the present application are a winding needle (10), a winding device (1000) and a battery processing system. The winding needle comprises: an inner needle (11); at least two outer needles (12), which surround the inner needle along the circumference of the inner needle, and are movably arranged on the circumferential side of the inner needle in the radial direction of the inner needle; and a first structural member (13), which abuts against the outer needles, and can move relative to the outer needles in the axial direction of the inner needle to push the outer needles away from the inner needle in the radial direction of the inner needle. In the winding needle of the present application, the first structural member pushes the outer needles away from the inner needle in the radial direction of the inner needle, thereby achieving the effect of expanding the outer diameter of the winding needle; and the first structural member can be disengaged from the outer needles, and then an electrode assembly can apply pressure to the winding needle to enable the outer needles to move close to the inner needle in the radial direction of the inner needle, thereby achieving the effect of reducing the outer diameter of the winding needle. In this way, the outer diameter of the winding needle can be increased or decreased, so that the outer diameter of the winding needle can be adjusted during the winding process of the electrode assembly, thereby reducing the tab misalignment.

## Description

The present application claims priority to the Chinese patent application No. 202420969109.5 filed to the China National Intellectual Property Administration on May 7, 2024 and entitled "WINDING NEEDLE AND WINDING DEVICE," which is incorporated herein by reference in its entirety.

The present application claims priority to the Chinese patent application No. 202410043912.0 filed to the China National Intellectual Property Administration on January 11, 2024 and entitled "WINDING DEVICE AND BATTERY MANUFACTURING DEVICE," which is incorporated herein by reference in its entirety.

The present application claims priority to the Chinese patent application No. 202420072183.7 filed to the China National Intellectual Property Administration on January 11, 2024 and entitled "WINDING DEVICE," which is incorporated herein by reference in its entirety.

### TECHNICAL FIELD

The present application relates to the field of battery technologies, and in particular, to a winding needle, a winding device, and a battery processing system.

### BACKGROUND

With energy saving and emission reduction being the key to the sustainable development of the automobile industry, electric vehicles have become an important part of the sustainable development of automotive industry due to their advantages of energy saving and environmental protection. For the electric vehicles, the battery technology is another important factor regarding the development thereof.

In a battery processing process, winding of electrode assemblies is a very important step, and the electrode assemblies usually need to be wound using a winding needle. The current winding needle is prone to tab misalignment in a winding process, resulting in a low yield of the electrode assemblies.

### SUMMARY OF THE INVENTION

In view of the above problems, the present application provides a winding needle, a winding device, and a battery processing system, which are capable of alleviating the problem of low yield caused by tab misalignment in a winding process of an electrode assembly.

In a first aspect, an embodiment of the present application provides a winding needle, including:
an inner needle;
at least two outer needles surrounding the inner needle in a circumferential direction of the inner needle, the outer needles being movably arranged on a circumferential side of the inner needle in a radial direction of the inner needle; and
a first structural member abutting against the outer needles, the first structural member being capable of moving relative to the outer needles in an axial direction of the inner needle to push the outer needles away from the inner needle in the radial direction of the inner needle.

In the technical solution of this embodiment, the outer needles are arranged surrounding the inner needle and capable of moving in the radial direction of the inner needle. The first structural member abutting against the outer needles is arranged, so that the first structural member pushes the outer needles away from the inner needle in the radial direction of the inner needle, thereby achieving an effect of increasing an outer diameter of the winding needle. Meanwhile, the first structural member is capable of being disengaged from the outer needles, and in this case, under the action of tension in a winding process of an electrode assembly, the electrode assembly is capable of applying a pressure to the winding needle to enable the outer needles to move toward the inner needle in the radial direction of the inner needle, thereby achieving an effect of decreasing the outer diameter of the winding needle. In this way, the outer diameter of the winding needle is capable of being increased or decreased, so that the outer diameter of the winding needle is capable of being adjusted in the winding process of the electrode assembly, thereby reducing tab misalignment.

In some embodiments, the winding needle further includes an elastic member arranged within the winding needle, one end of the elastic member is connected to one of the outer needles, the other end of the elastic member is capable of being connected to the inner needle or another of the outer needles, and the elastic member is configured to apply, to the outer needles, a force pointing to the inner needle.

In the technical solution of this embodiment, the elastic member applies, to the outer needles, the force pointing to the inner needle, so that the elastic member is capable of pressing the outer needles against the first structural member, and the first structural member is capable of cooperating with the elastic member to drive the outer needles to move toward or away from the inner needle in the radial direction of the inner needle, thereby enabling the winding needle to have a function of increasing the outer diameter and decreasing the outer diameter, which in turn makes it easier to reduce occurrence of tab misalignment in the winding process of the electrode assembly.

In some embodiments, the first structural member includes a first slope, the first slope is inclined relative to an axis of the inner needle and forms a first included angle with the axis of the inner needle, and the first slope abuts against the outer needles so that the outer needles are capable of moving relative to the first structural member along the first slope.

In the technical solution of this embodiment, the first structural member includes the first slope, and the first slope abuts against the outer needles. In this case, the movement of the first structural member is capable of pushing the outer needles to move away from the inner needle along the first slope. Meanwhile, under the action of tension of the elastic member or the electrode assembly, the outer needles are also capable of moving toward the inner needle along the first slope when the first structural member moves in an opposite direction, so that the outer diameter of the winding needle is capable of being increased or decreased.

In some embodiments, an angle range of the first included angle is 40° to 50°.

The technical solution of this embodiment provides the range of the included angle of the first slope, so as to limit, by the included angle of the first slope, a distance by which the outer needles are capable of moving in the radial direction of the inner needle, so that a change in the outer diameter of the winding needle can be adjusted by moving the first structural member by a short distance, and the adjustment of the outer diameter of the winding needle is capable of having a fast response speed. Meanwhile, it is also capable of reducing resistance between the first structural member and the outer needles, thereby reducing frictional wear between the first structural member and the outer needles and improving service life of the winding needle.

In some embodiments, a length range of the first slope is 3 mm to 5 mm.

The technical solution of this embodiment provides the length range of the first slope to limit, by the length of the first slope, the distance by which the outer needles are capable of moving in the radial direction of the inner needle, thereby limiting a variation range of the outer diameter of the winding needle and reducing the occurrence of tab misalignment in the winding process of the electrode assembly.

In some embodiments, the winding needle further includes a second structural member, the second structural member and the first structural member are respectively arranged at two opposite ends of the inner needle in the axial direction of the inner needle, and the second structural member abuts against the outer needles at least in the axial direction of the inner needle. The first structural member is capable of moving relative to the second structural member in the axial direction of the inner needle.

In the technical solution of this embodiment, the first structural member and the second structural member are arranged at both ends of the inner needle, to allow the first structural member and the second structural member to be capable of respectively abutting against the two ends of each of the outer needles. In the process of the first structural member moving and pushing the outer needles to move in the radial direction of the inner needle, the outer needles are capable of always abutting against the second structural member, so that the second structural member cooperates with the first structural member to support the outer needles, thereby being capable of increasing the stability of the outer needles during movement and reducing the occurrence of skewing or similar issues of the outer needles during movement.

In some embodiments, the second structural member includes a second slope, the second slope abuts against the outer needles, and a second included angle is formed between the second slope and the axis of the inner needle.
a projection of an intersection between a plane containing the second slope and a plane containing the first slope in the radial direction of the inner needle is within a middle region of the inner needle.

In the technical solution of this embodiment, the second slope is provided on the second structural member, and the intersection between the second slope and the first slope is within the middle region of the inner needle, so that the first slope and the second slope are inclined in opposite directions. In the process of the first structural member moving and pushing the outer needles to move, this arrangement enables the outer needles to be capable of always abutting against the second slope and moving along the second slope, so as to support the outer needles through the second slope and improve the stability of the movement of the outer needles.

In some embodiments, the second included angle is equal to the first included angle.

In the technical solution of this embodiment, the second slope has an inclination angle the same as that of the first slope, so that in the process of the first structural member moving and pushing the outer needles to move, the outer needles are capable of always abutting against the second slope and moving along the second slope, so as to support the outer needles through the second slope and improve the stability of the movement of the outer needles, and reduce the occurrence of skewing or similar issues of the outer needles during movement.

In some embodiments, the outer needles are each provided with two third structural members, the two third structural members are arranged at both ends of the outer needle in the axial direction of the inner needle, and the two third structural members abut against the first structural member and the second structural member, respectively.

In the technical solution of this embodiment, the outer needle is provided with the two third structural members abutting against the first structural member and the second structural member, respectively, so that both the first structural member and the second structural member are capable of supporting the outer needle through the third structural members, thereby being capable of increasing the stability of the outer needle during movement and reducing the occurrence of skewing or similar issues of the outer needle during movement.

In some embodiments, the two third structural members each include a third slope, one of the two third slopes is parallel to an adjacent first slope and abuts against the first slope, and the other of the two third slopes is parallel to an adjacent second slope and abuts against the second slope.

In the technical solution of this embodiment, the third slopes are provided on the third structural members, and the two third slopes are respectively parallel to the adjacent first slope or second slope. This ensures surface contact between the third structural member and the first structural member, as well as between the third structural member and the second structural member, thereby being capable of enhancing the stability of the contact between the third structural member and the first structural member, and between the third structural member and the second structural member, and being further capable of enhancing the stability of the outer needle during movement and reducing the occurrence of skewing or similar issues of the outer needle during movement.

In some embodiments, the first structural member is fixedly connected to the inner needle; the winding needle further includes a driving assembly, and the driving assembly is configured to drive the inner needle to move in the axial direction of the inner needle, so as to push the outer needles away from the inner needle in the radial direction of the inner needle by means of the first structural member.

The technical solution of this embodiment provides some specific structures for driving the first structural member to move. The driving assembly drives the inner needle to move, and the inner needle drives the first structural member to move, so that the first structural member is capable of pushing the outer needles to move, thereby achieving the effect of adjusting the outer diameter of the winding needle.

In some embodiments, an air intake hole is provided on the outer needle; at least two of the outer needles are capable of enclosing an airflow space, the airflow space is in communication with the air intake hole, and the airflow space is configured to be in communication with an air extraction apparatus to form a negative pressure in the airflow space.

In the technical solution of this embodiment, the air extraction apparatus is capable of extracting the air in the airflow space to the outside of the winding needle, so as to form the negative pressure in the airflow space. The negative pressure in the airflow space is capable of adsorbing the electrode assembly near the air intake hole onto the outer needle, so as to achieve a function of fixing the electrode assembly.

In some embodiments, there are at least two air intake holes, and the at least two air intake holes are evenly distributed on the outer needle.

In the technical solution of this embodiment, there are at least two air intake holes, which allows the outer needle to have at least two positions for adsorbing the electrode assembly, thereby improving the stability of fixing the electrode assembly and enhancing the fixing effect. The at least two air intake holes are evenly distributed, so that adsorption forces applied to the electrode assembly can be more uniform, thereby reducing abnormalities such as deformation that may be caused by uneven stress on the electrode assembly.

In some embodiments, an aperture range of the air intake hole is 1 mm to 2 mm, and a distance between two adjacent air intake holes is 2 mm to 4 mm.

The technical solution of this embodiment provides the aperture range and the spacing range of some air intake holes, so that the air intake holes are capable of stably adsorbing the electrode assembly and reducing the occurrence of deformation of the electrode assembly caused by the electrode assembly or the separator entering the air intake holes.

In some embodiments, a range of the negative pressure is -50 KPa to -75 KPa.

The technical solution of this embodiment provides the range of the negative pressure in the airflow space, enabling the winding needle to stably adsorb the electrode assembly while reducing the occurrence of the deformation of the electrode assembly due to the electrode assembly or separator entering the air intake holes.

In some embodiments, an airflow channel in communication with the airflow space is opened in the inner needle. One end of the airflow channel is used to be in communication with the air extraction apparatus so as to extract gas in the airflow space through the airflow channel to the outside of the winding needle.

In the technical solution of this embodiment, the airflow channel is opened in the inner needle so that the air extraction apparatus is capable of extracting the gas in the airflow space out through the airflow channel and forming the negative pressure, thereby facilitating the air extraction apparatus to extract the gas from the airflow space, and meanwhile reducing the difficulty of arranging the various structures inside the winding needle and saving space.

In some embodiments, the outer needles each include a middle portion, and both ends of the middle portion are connected to end portions in the axial direction of the inner needle, with the end portions abutting against the first structural member. The air intake hole is at least opened in the middle portion, and the airflow space is at least formed between the middle portions of different outer needles.

In the technical solution of this embodiment, the outer needle includes the middle portion and an end plate, so that the end portion is capable of abutting against the first structural member, to facilitate the first structural member to push the outer needle to move. The air intake hole is opened on the middle portion, so that the winding needle can fix the electrode assembly near the middle portion, thereby enabling the winding needle to fix the electrode assembly more stably.

In some embodiments, a thickness range of the middle portion is 5 mm to 8 mm.

The technical solution of this embodiment provides the thickness range of the middle portion so that the middle portion is capable of having strong strength and further capable of reducing space occupation, and therefore, the airflow is capable of being smoothly drawn out from the airflow space to the outside of the winding needle, while also reducing the weight of the outer needle.

In some embodiments, the end portion is detachably connected to the middle portion.

In the technical solution of this embodiment, the end portion being detachably connected to the middle portion is capable of facilitating mounting, replacement, and maintenance of the outer needle, while facilitating overall assembling of the winding needle.

In some embodiments, an unloading groove is further provided on a circumferential side surface of the outer needle, and in the axial direction of the inner needle, at least one end of the unloading groove is in communication with the space outside the winding needle.

In the technical solution of this embodiment, the unloading groove is provided on the outer needle to facilitate an unloading apparatus to enter the wound electrode assembly and remove the electrode assembly from the winding needle.

In a second aspect, some embodiments of the present application further provide a winding device, including the winding needle provided in some embodiments of the first aspect.

In some embodiments, the winding device includes: a first unwinding mechanism configured to unwind a first electrode plate, a first separator, and a second electrode plate; a second unwinding mechanism configured to unwind a second separator; a composite mechanism configured to at least press the first electrode plate and the first separator together; and a winding mechanism located downstream of the composite mechanism, the winding mechanism being configured to wind the first electrode plate, the first separator, the second electrode plate, and the second separator to form an electrode assembly.

In the technical solution of this embodiment, at least two of the first electrode plate, the first separator, and the second electrode plate are first composited, and then the first electrode plate, the first separator, the second electrode plate, and the second separator are wound on the winding mechanism. The composite mechanism and the winding mechanism of the winding device are capable of being spaced apart, each obtaining a relatively large space. Moreover, the winding device does not need to separately feed a cathode electrode plate, an anode electrode plate, and the separators to the winding mechanism, which solves the problem of space congestion above the winding mechanism, optimizes the layout of the winding device, and facilitates flexible arrangement of various components.

In some embodiments, the winding mechanism includes a base and at least two winding needles, the winding needles are rotatably connected to the base, and the base is configured to drive different winding needles to move alternately to one side of the composite mechanism.

In the technical solution of this embodiment, the base is provided and the winding needles are arranged on the base, so that the base is capable of driving the winding needles to move alternately on one side of the composite mechanism. This allows finishing processing after the winding needles wind the electrode assembly to be performed in another position, so that the feeding of the electrode plates and separators does not need to wait for the finishing processing to be completed, thereby reducing a feeding waiting time of the electrode plates and separators. The composite mechanism is arranged in front of the winding mechanism, and the electrode plates and separators are bonded together through the composite mechanism, so that the electrode plates and separators do not need to be composited at the winding needles, thereby reducing the functional requirements of the winding needles and allowing the winding needles to wind faster, and further improving the production efficiency.

In some embodiments, the first unwinding mechanism includes: a first unwinding assembly configured to unwind the first electrode plate; a second unwinding assembly configured to unwind the first separator; and a third unwinding assembly configured to unwind the second electrode plate. The composite mechanism includes a first composite assembly, and the first composite assembly is configured to press the first electrode plate, the first separator, and the second electrode plate together to form a first composite plate body.

In the technical solution of this embodiment, the first composite assembly is capable of compositing the first electrode plate, the first separator, and the second electrode plate in one step. The composite method is simple and the composite efficiency is high.

In some embodiments, the winding device further includes: a first electrode plate cut-off assembly arranged between the first unwinding assembly and the first composite assembly, the first electrode plate cut-off assembly being configured to cut off the first electrode plate; and a second electrode plate cut-off assembly arranged between the third unwinding assembly and the first composite assembly, the second electrode plate cut-off assembly being configured to cut off the second electrode plate.

In the technical solution of this embodiment, the winding device further includes the first electrode plate cut-off assembly and the second electrode plate cut-off assembly to cut off the first electrode plate and the second electrode plate respectively. This allows the first electrode plate cut-off assembly and the second electrode plate cut-off assembly to cut off the first electrode plate and the second electrode plate before the first electrode plate, the first separator, and the second electrode plate are composited, thereby being capable of easily making a length of the separator greater than a length of the electrode plate, thus meeting use requirements of the electrode assembly.

In some embodiments, the second unwinding mechanism is arranged between the first composite assembly and the winding mechanism.

In the technical solution of this embodiment, the second unwinding mechanism is located downstream of the first composite assembly. The second electrode plate provided by the second unwinding mechanism is capable of being laminated with the first composite plate body and wound together. The second unwinding mechanism is capable of being spaced apart from the winding mechanism to avoid the problem of space congestion above the winding mechanism.

In some embodiments, the second unwinding mechanism includes a separator unwinding assembly and a conveying roller. The separator unwinding assembly is configured to unwind the second separator, and the conveying roller is configured to allow the second separator to be converged with the first composite plate body to form a laminated plate body, and to convey the laminated plate body to the winding mechanism.

In the technical solution of this embodiment, the winding device separates the unwinding assemblies from the winding mechanism, so that the layout is flexible and convenient.

In some embodiments, the second unwinding mechanism is arranged on one side of the winding mechanism, and the second unwinding mechanism is configured to convey the second separator to the winding needle so that the first composite plate body and the second separator are converged on the winding needle.

In the technical solution of this embodiment, the first composite plate body and the second separator are directly converged and composited on the winding needle, thereby saving the composite structure and simplifying the structure of the winding device.

In some embodiments, the winding device further includes a first separator cut-off assembly, and the first separator cut-off assembly is arranged adjacent to the winding mechanism and is configured to cut off the first separator and/or the second separator.

In the technical solution of this embodiment, the first separator cut-off assembly is arranged at the winding mechanism, enabling the winding device to cut off the separator either before or after the electrode assembly is wound. This eliminates the need for dedicated separator cut-off time, thereby improving the overall winding efficiency.

In some embodiments, the first unwinding mechanism includes: a first unwinding assembly configured to unwind the first electrode plate; and a second unwinding assembly configured to unwind the first separator. The composite mechanism includes a second composite assembly, and the second composite assembly is configured to press the first electrode plate and the first separator together to form a second composite plate body.

In the technical solution of this embodiment, the second composite assembly is capable of first compositing the first electrode plate and the first separator, so as to facilitate subsequent composite with the second electrode plate and the second separator. This is capable of reducing the possibility of poor composite effect that may occur when two electrodes and two separators are composited at the same composite structure.

In some embodiments, the first unwinding mechanism further includes a third unwinding assembly configured to unwind the second electrode plate.

The composite mechanism further includes a third composite assembly, and the third composite assembly is configured to press the second composite plate body, the second electrode plate, and the second separator together to form an electrode assembly.

In the technical solution of this embodiment, the third composite assembly is capable of compositing the second composite plate body, the second electrode plate, and the second separator to form the electrode assembly. Compared with the solution where the electrode plates and the separators are composited at the winding needle, this arrangement is capable of reducing the functional requirements for the winding needle, thereby facilitating an increase in the winding speed of the winding needle and improving the production efficiency. Meanwhile, it also enables the composite of the electrode plates and the separators to be completed before winding, which reduces the occurrence of displacement of the electrode plates and separators in the winding process.

In some embodiments, the winding device further includes: a third electrode plate cut-off assembly arranged between the first unwinding assembly and the second composite assembly, the third electrode plate cut-off assembly being configured to cut off the first electrode plate; and a fourth electrode plate cut-off assembly arranged between the third unwinding assembly and the third composite assembly, the fourth electrode plate cut-off assembly being configured to cut off the second electrode plate.

In the technical solution of this embodiment, the winding device further includes the third electrode plate cut-off assembly and the fourth electrode plate cut-off assembly to cut off the first electrode plate and the second electrode plate respectively. This allows the third electrode plate cut-off assembly to cut off the first electrode plate before the first electrode plate and the first separator are composited, and allows the fourth electrode plate cut-off assembly to cut off the second electrode plate before the second composite plate body, the second electrode plate, and the second separator are composited, thereby being capable of easily making a length of the separator greater than a length of the electrode plate, thus meeting use requirements of the electrode assembly.

In some embodiments, the winding device further includes a second separator cut-off assembly, and the second separator cut-off assembly is arranged between the third composite assembly and the winding mechanism.

In the technical solution of this embodiment, the second separator cut-off assembly is arranged between the third composite assembly and the winding mechanism, so that the second separator cut-off assembly cuts off the separator after the electrode assembly, the second electrode plate, and the second separator are composited. This arrangement is capable of easily making the length of the separator greater than the length of the electrode plate, thus meeting the use requirements of the electrode assembly.

In a third aspect, some embodiments of the present application further provide a battery processing system, including the winding device provided in some embodiments of the second aspect.

The above illustrations are merely brief descriptions for the technical solutions of the present application. Specific implementation manners of the present application are described specifically in the following to understand the technical solutions of the present application more clearly and implement the present application according to content of the specification, and to make the above and other objectives, features and advantages of the present application more comprehensible.

### BRIEF DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. In addition, throughout the accompanying drawings, the same reference numeral is used to represent the same component. In the accompanying drawings:
FIG. 1 is a schematic three-dimensional view of a winding needle according to some embodiments of the present application;
FIG. 2 is a schematic top view of a winding needle according to some embodiments of the present application;
FIG. 3 is a schematic sectional view of A-A in FIG. 2;
FIG. 4 is a schematic partial enlarged view of B in FIG. 3;
FIG. 5 is a schematic partial enlarged view of B in FIG. 3 according to another embodiment;
FIG. 6 is a schematic partial enlarged view of C in FIG. 3;
FIG. 7 is a schematic structural view of an electrode assembly according to some embodiments of the present application;
FIG. 8 is a schematic structural view of a winding device according to a first embodiment of the present application;
FIG. 9 is a schematic structural view of a winding device according to a second embodiment of the present application;
FIG. 10 is a schematic structural view of a winding device according to a third embodiment of the present application;
FIG. 11 is a schematic structural view of a winding device according to a fourth embodiment of the present application; and
FIG. 12 is a schematic structural view of a winding device according to a fifth embodiment of the present application.

Meanings of the reference numerals in the drawings are as follows:
10. Winding needle;
101. Airflow channel; 102. Airflow space;
11. Inner needle;
12. Outer needle; 121. Middle portion; 1211. Air intake hole; 122. End portion; 1221. Third structural member; 12211. Third slope; 123. Unloading groove;
13. First structural member; 131. First slope;
14. Elastic member;
15. Seat; 151. Second structural member; 1511. Second slope; 152. Cavity; 153. Interface;
16. Driving assembly
1000. Winding device;
100. First unwinding mechanism;
21. First unwinding assembly; 22. Second unwinding assembly; 23. Third unwinding assembly;
200. Second unwinding mechanism;
31. Separator unwinding assembly; 32. Conveying roller;
300. Composite mechanism;
41. First composite assembly; 42. Second composite assembly; 43. Third composite assembly;
400. Winding mechanism;
50. Base;
61. First electrode plate cut-off assembly; 62. Second electrode plate cut-off assembly;
71. First separator cut-off assembly; 72. Second separator cut-off assembly;
81. Third electrode plate cut-off assembly; 82. Fourth electrode plate cut-off assembly;
2000. Electrode assembly;
91. First electrode plate; 92. First separator; 93. Second electrode plate; 94. Second separator.

### DETAILED DESCRIPTION

The embodiments of the technical solution of the present application will be described in detail below with reference to the accompanying drawings. The following embodiments are only used to illustrate the technical solutions of the present application more clearly, and thus are only interpreted as examples, rather than used to limit the scope of protection of the present application.

Unless otherwise defined, all technical and scientific terms used herein have the same meanings as those commonly understood by those skilled in the art of the present application. The terms used herein are intended only for the purpose of describing specific embodiments and are not intended to limit the present application. The terms "including" and "having" and any variations thereof in the specification and claims of the present application and in the description of the above accompanying drawings are intended to cover non-exclusive inclusion.

In the description of the embodiments of the present application, the technical terms such as "first" and "second" are only used to distinguish between different objects, but cannot be understood as indicating or implying relative importance or implicitly indicating the number, particular order, or primary-secondary relationship of the indicated technical features. In the description of the embodiments of the present application, the meaning of "a plurality of" is two or more, unless otherwise explicitly and specifically defined.

Reference herein to an "embodiment" means that a particular feature, structure, or property described with reference to the embodiment may be included in at least one embodiment of the present application. The appearances of the phrase in various places in the specification neither necessarily refer to a same embodiment, nor are independent or alternative embodiments mutually exclusive from other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix," etc. should be understood in a broad sense, such as, a fixed connection, a detachable connection, or an integral connection; a mechanical connection, or an electrical connection; directly connect, indirectly connect through an intermediate medium, an internal communication of two elements, or interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, their market demand is also constantly increasing.

In a battery production process, winding of electrode assemblies is a very important step, and the electrode assemblies usually need to be wound using a winding needle. Currently, the winding needle is prone to tab misalignment in the winding process. The tab misalignment easily reduces a current flow area, or even prevents current from flowing normally, thus reducing battery capacity. The tab misalignment may also easily cause an excessively high voltage in some regions, affecting battery life. The tab misalignment may also easily cause short circuits, desoldering, and the like during welding. In short, the tab misalignment may negatively affect the capacity, service life, and safety performance of the electrode assembly.

There are many reasons for the tab misalignment, such as an insufficient equipment precision, a deviation in tab material and size, and an uneven thickness of an electrode plate. The tab has a certain thickness. As the electrode assembly is wound on the winding needle, a circumference of an outermost layer of the electrode assembly gradually increases with the increase of the number of turns of the electrode assembly. However, a spacing between the tabs on the electrode assembly is roughly the same, which may easily lead to misalignment between the tabs of different layers.

Based on the above considerations, in order to alleviate the problem of tab misalignment during the winding of the electrode assembly, embodiments of the present application provides a winding needle. The winding needle includes an inner needle and at least two outer needles surrounding the inner needle. A first structural member is arranged so that the first structural member is capable of moving in an axial direction of the inner needle and capable of pushing the outer needles to move away from the inner needle in a radial direction of the inner needle, thereby increasing an outer diameter of the winding needle.

In such a winding needle, the first structural member moving in one direction in the axial direction of the inner needle is capable of abutting against the outer needles and pushing the outer needles to move, thereby increasing the outer diameter of the winding needle. As the electrode assembly is wound, the first structural member can move in another direction in the axial direction of the inner needle to disengage from the outer needle. In this case, under the action of a tension of winding of the electrode assembly, the outer needles are capable of moving close to the inner needle and being pressed against the first structure, thereby decreasing the outer diameter of the winding needle and correspondingly reducing the circumference of the outermost ring of the electrode assembly, thus alleviating the problem of tab misalignment.

The winding needle and the winding device provided in the embodiments of the present application can wind and form cylindrical electrode assemblies, or prismatic electrode assemblies, or electrode assemblies in other shapes. The electrode assembly formed by the winding device may serve as a component where electrochemical reactions occur within a battery cell. The battery cell may be used in an electrical apparatus using a battery as a power source or various energy storage systems each using a battery as an energy storage element. The electrical apparatus may be, but is not limited to, a mobile phone, a tablet, a notebook, an electric toy, an electric tool, a battery vehicle, an electric vehicle, a ship, a spacecraft, and the like. The electric toy may include fixed or mobile electric toys, such as a game machine, an electric vehicle toy, an electric ship toy, an electric airplane toy, and the like. The spacecraft includes an airplane, a rocket, a space shuttle, a spaceship, and the like.

For the convenience of description in the following embodiments, a winding device 1000 for forming a square electrode assembly 2000 according to some embodiments of the present application is taken as an example for the description.

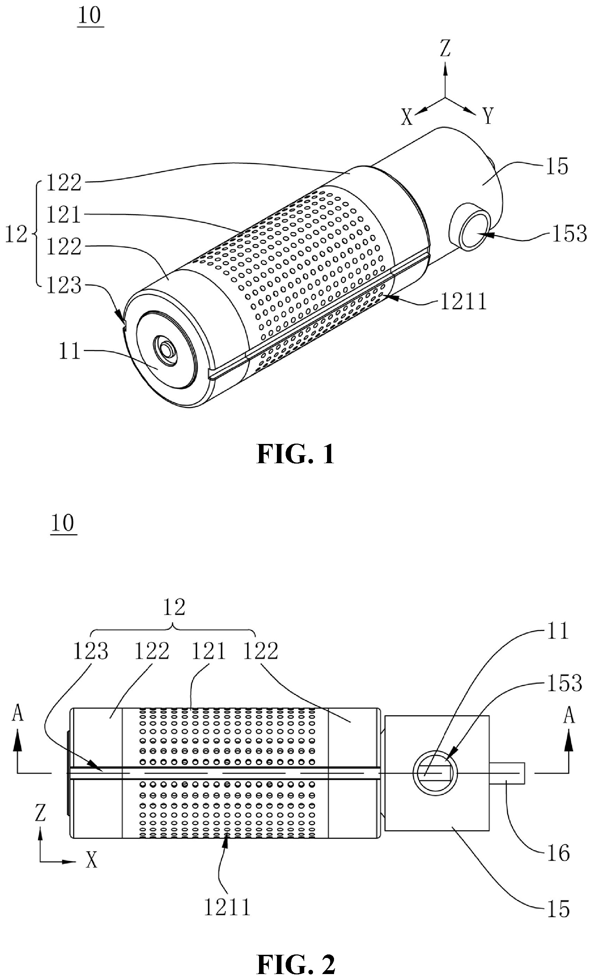

In a first aspect, as shown in FIG. 1 to FIG. 3, some embodiments of the present application provide a winding needle 10. The winding needle 10 includes an inner needle 11, an outer needle 12, and a first structural member 13. There are at least two outer needles 12, and the at least two outer needles 12 surround the inner needle 11 in a circumferential direction of the inner needle 11. The first structural member 13 abuts against the outer needles 12, the first structural member 13 is capable of moving relative to the outer needles 12 in an axial direction of the inner needle 11 to push the outer needles 12 away from the inner needle 11 in a radial direction of the inner needle 11.

In FIG. 1 to FIG. 3, a direction of an X-axis is the axial direction of the winding needle 10 and also the axial direction of the inner needle 11. The radial direction of the winding needle 10 is a direction perpendicular to the axial direction of the winding needle 10, for example, directions of a Y-axis and a Z-axis are both radial directions of the winding needle 10 and also radial directions of the inner needle 11. The circumferential direction of the inner needle 11 is a direction surrounding the X-axis, and the circumferential direction of the inner needle 11 is also parallel to a plane containing the Y-axis and Z-axis.

The inner needle 11 refers to a structure in the winding needle 10, and is located inside the winding needle 10. The inner needle 11 is configured to drive the winding needle 10 to rotate. The inner needle 11 is capable of being connected to an external drive structure (such as a motor) and rotating along with the external drive structure. That is, the external drive structure can drive the inner needle 11 to rotate, thereby driving the winding needle 10 to rotate. The inner needle 11 may be cylindrical, prismatic, or in other shapes. A material of the inner needle 11 may include plastic, metal, or other materials.

The outer needle 12 refers to a structure in the winding needle 10 that is in contact with the electrode assembly 2000. There are at least two outer needles 12, and the quantity of the outer needles 12 may be two, three, or more. The at least two outer needles 12 are arranged surrounding the inner needle 11 in the circumferential direction of the inner needle 11, that is, the at least two outer needles 12 are capable of assembled to form a sidewall structure of the winding needle 10 so that the electrode assembly 2000 is capable of being wound on the sidewall structure. The at least two outer needles 12 cover at least part of the inner needle 11 in the circumferential direction of the inner needle 11 so that the electrode assembly 2000 can be wound on the sidewall structure formed by the outer needles 12.

The at least two outer needles 12 surround the inner needle 11 and are assembled to form the sidewall structure of the winding needle 10, and therefore, the shape of the outer needles 12 is capable of affecting the shape of the winding needle 10. Accordingly, the outer needles 12 may each be an arc-shaped plate structure, in which case the winding needle 10 may be a cylindrical structure. The outer needles 12 may also each be a flat plate structure, in which case the winding needle 10 may be a prism structure. The outer needles 12 may also each be a shaped structure.

A material of the outer needle 12 may include plastic, metal, or other materials. The materials of the outer needle 12 and the inner needle 11 may be the same or different.

The outer needle 12 is movably arranged on the circumferential side of the inner needle 11 in the radial direction of the inner needle 11, that is, the outer needle 12 is capable of moving relative to the inner needle 11 to move toward or away from the inner needle 11 in the radial direction of the inner needle 11. The outer needle 12 may be directly slidably connected to the inner needle 11, or may move in the radial direction of the inner needle 11 by means of a guide structure such as a guide rail, a guide shaft, or another structure with guiding capability. The outer needle 12 may be made to move along the guide rail, the guide shaft, or other guiding structure, such that the outer needle 12 moves in the radial direction of the inner needle 11.

The first structural member 13 refers to a member in the winding needle 10 that is capable of moving relative to the inner needle 11. The first structural member 13 may be arranged on the inner needle 11 and move relative to the inner needle 11, or may be arranged on another structure of the winding needle 10 and move relative to the inner needle 11. For example, the first structural member 13 may be a rod-shaped structure, a plate-shaped structure, or a structure in another shape arranged on one side of the inner needle 11. The first structural member 13 may also be a ring-shaped structure, a cylindrical structure, or a structure in another shape sleeved on the inner needle 11. A material of the first structural member 13 may include plastic, metal, or another material.

The first structural structure 13 is capable of moving relative to the outer needle 12 in the axial direction X of the inner needle 11, and the first structural member 13 abuts against the outer needle 12, so that the movement of the first structural member 13 is capable of pushing the outer needle 12 away from the inner needle 11 in the radial direction Y of the inner needle 11. In some embodiments, the first structural member 13 may be a wedge-shaped block, with the outer needle 12 abutting against a slope of the wedge-shaped block. In this case, the axial movement of the wedge-shaped block in the inner needle 11 is capable of pushing, through the slope, the outer needle 12 to move along the slope of the wedge-shaped block to move away from the inner needle 11. In other embodiments, the first structural member 13 may be a connecting rod, with one end of the connecting rod capable of moving in the axial direction of the inner needle 11 and the other end of the connecting rod abutting against the outer needle 12. In this case, the axial movement of one end of the connecting rod along the inner needle 11 is capable of pushing the other end away from the inner needle 11. It is understandable that the first structural member 13 may further include other structures, and is not limited to the two mentioned above.

The first structural member 13 may abut against an edge of the outer needle 12 in the axial direction X of the inner needle 11, or a structural member may be arranged on the side of the outer needle 12 facing the inner needle 11, and the first structural member 13 may abut against the structural member.

Since there are at least two outer needles 12, there may be only one first structural member 13 abutting against each of the outer needles 12. There may also be two or more first structural members 13, so that each of the outer needles 12 is capable of corresponding to at least one of the first structural members 13. It is understandable that when there are a plurality of first structural members 13, the plurality of first structural members 13 should be capable of moving synchronously to drive the outer needles 12 to move synchronously.

The movement of the first structural member 13 in the axial direction X of the inner needle 11 can be achieved through various structures. In some embodiments, the inner needle 11 is provided with a groove extending in the axial direction X of the inner needle 11, and at least part of the first structural member 13 is capable of being accommodated in the groove and sliding along the groove. In other embodiments, the inner needle 11 may be provided with a guide shaft extending in the axial direction X of an inner diameter, the guide shaft pass through the first structural member 13, and the first structural member 13 is capable of sliding along the guide shaft. In still other embodiments, the inner needle 11 may be directly passed through the first structural member 13, that is, the first structural member 13 is sleeved on the inner needle 11, so that the first structural member 13 is capable of sliding in the axial direction X of the inner needle 11.

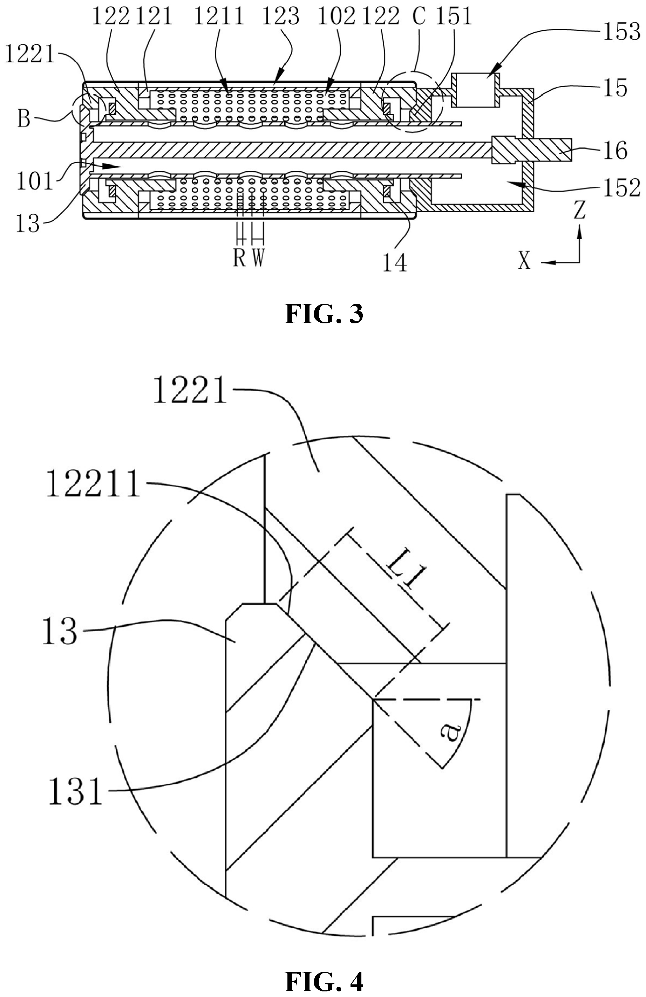

It is understandable that the movement of the first structural member 13 in one direction (e.g., to the right in the X-axis in FIG. 3) may push the outer needle 12 away from the inner needle 11 to increase the outer diameter of the winding needle 10. However, if the first structural member 13 moves in another direction (e.g., to the left in the X-axis in FIG. 3), the outer needle 12 may be disengaged from the first structural member 13. In this case, the first structural member 13 will not easily drive the outer needle 12 to move. In the process of winding the electrode assembly 2000 around the winding needle 10, this situation may utilize a force applied by the electrode assembly 2000 wound around the winding needle 10 to the winding needle 10 to reduce the outer diameter of the winding needle 10. For example, the tension on the electrode assembly 2000 is capable of applying a pressure to the winding needle 10 in a direction directing to the inner needle 11. When the first structural member 13 moves in another direction (e.g., to the left in the X-axis in FIG. 3), the outer needle 12 is disengaged from the first structural member 13. The first structural member 13 can no longer provide support for the outer needle 12. In this case, the pressure generated by the electrode assembly 2000 is capable of causing the outer needle 12 to move toward the inner needle 11 and reabut against the first structural member 13, thereby achieving the effect of decreasing the outer diameter of the winding needle 10.

In the process of winding the electrode assembly 2000 around the winding needle 10, as the number of turns of the electrode assembly 2000 increases, the outer diameter of the winding needle 10 may be gradually reduced to reduce the occurrence of tab misalignment of the outermost layer of the electrode assembly 2000. If the tab misalignment is caused due to other reasons in the winding process of the electrode assembly 2000, the outer diameter of the winding needle 10 may be increased or decreased as appropriate to alleviate the tab misalignment.

In this embodiment, the first structural member 13 pushes the outer needles 12 away from the inner needle 11 in the radial direction of the inner needle 11, thereby achieving an effect of increasing the outer diameter of the winding needle 10. Meanwhile, the first structural member 13 is capable of being disengaged from the outer needles 12, and in this case, under the action of tension in the winding process of the electrode assembly 2000, the electrode assembly 2000 is capable of applying the pressure to the winding needle 10 to enable the outer needles 12 to move toward the inner needle 11 in the radial direction of the inner needle 11, thereby achieving the effect of decreasing the outer diameter of the winding needle 10. The outer diameter of the winding needle 10 is capable of being increased or decreased, so that the outer diameter of the winding needle 10 is capable of being adjusted in the winding process of the electrode assembly 2000 to adapt to different conditions, thereby alleviating the occurrence of tab misalignment.

Referring to FIG. 2 and FIG. 3, in some embodiments, the winding needle 10 further includes an elastic member 14 arranged within the winding needle 10, one end of the elastic member 14 is connected to one of the outer needles 12, the other end of the elastic member 14 is capable of being connected to the inner needle 11 or another of the outer needles 12, and the elastic member 14 is configured to apply, to the outer needles 12, a force pointing to the inner needle 11.

The elastic member 14 refers to an elastic structure in the winding needle 10. The elastic member 14 may include a spring, a rubber strip, or another elastic structure. A material of the elastic member 14 may include metal, rubber, or another elastic material.

The elastic member 14 is arranged inside the winding needle 10, that is, the elastic member 14 is located between the at least two outer needles 12. The elastic member 14 is configured to apply a force to the outer needles 12 in the direction pointing to the inner needle 11. When the first structural member 13 moves and has a tendency to be disengaged from the outer needle 12, the elastic member 14 is capable of driving the outer needle 12 to move in a direction toward the inner needle 11, so as to approach the inner needle 11 and abut against the first structural member 13. For example, taking FIG. 3 as an example, when the first structural member 13 moves to the left, the first structural member 13 has a tendency to be disengaged from the outer needle 12. In this case, the elastic member 14 is capable of driving the outer needle 12 to move toward the inner needle 11, and is capable of making the outer needle 12 press against the first structural member 13.

When the outer needle 12 moves away from the inner needle 11, the elastic member 14 is in a stretched state and applies a force close to the inner needle 11 to the outer needle 12. When the outer needle 12 is at a position closest to the inner needle 11, the elastic member 14 may be in a stretched state or in an unstressed natural state.

One end of the elastic member 14 is connected to the outer needle 12, and the other end of the elastic member 14 may be connected to the inner needle 11. One end of the elastic member 14 is connected to the outer needle 12, and the other end of the elastic member 14 may also be connected to another outer needle 12. When there are three or more outer needles 12, the outer needle 12 may be connected to each of the outer needles 12. Since the plurality of outer needles 12 are arranged around the circumference of the inner needle 11, when the elastic member 14 is connected to each of the outer needles 12, the force applied by the elastic member 14 to each of the outer needles 12 may intersect on the axis of the inner needle 11. The elastic member 14 may also be connected to both the inner needle 11 and each of the outer needles 12. For example, the elastic member 14 has a middle portion sleeved on the inner needle 11 and an edge connected to each of the outer needles 12.

Depending on the material of the elastic member 14, the elastic member 14 may be connected to the corresponding outer needle 12 and inner needle 11 by welding, gluing, or the like, or may be connected to the corresponding outer needle 12 and inner needle 11 by screwing, hanging, or the like.

For example, the elastic member 14 is a rubber ring, and each of the outer needles 12 has hanging parts on a side facing the inner needle 11. The hanging parts of each of the outer needles 12 are distributed along the circumferential side of the inner needle 11. In this case, the rubber ring surrounds all the hanging parts, and each of the hanging parts is capable of extending into the rubber ring and abutting against an inner wall of the rubber ring. When the outer needle 12 moves away from the inner needle 11, the rubber ring deforms. When the first structural member 13 has a tendency to be disengaged from the outer needle 12, the rubber ring has a tendency to restore its original shape and move each of the outer needles 12 towards the inner needle 11 to press the outer needle 12 against the first structural member 13, thereby achieving the effect of decreasing the outer diameter of the winding needle 10.

In this embodiment, the elastic member 14 applies, to the outer needle 12, the force pointing to the inner needle 11, so that the elastic member 14 is capable of pressing the outer needle 12 against the first structural member 13, and the first structural member 13 is capable of cooperating with the elastic member 14 to drive the outer needle 12 to move toward or away from the inner needle 11 in the radial direction of the inner needle 11, thereby enabling the winding needle 10 to have a function of increasing the outer diameter and decreasing the outer diameter, and enabling the winding needle 10 to reduce the outer diameter without relying on the pressure of the winding of the electrode assembly 2000, which in turn makes it easier to reduce occurrence of tab misalignment in the winding process of the electrode assembly 2000.

Referring to FIG. 2 to FIG. 5, in some embodiments, the first structural member 13 includes a first slope 131, the first slope 131 is inclined relative to the axis of the inner needle 11 and forms a first included angle with the axis of the inner needle 11. The first slope 131 abuts against the outer needle 12 so that the outer needle 12 is capable of moving relative to the first structural member 13 along the first slope 131.

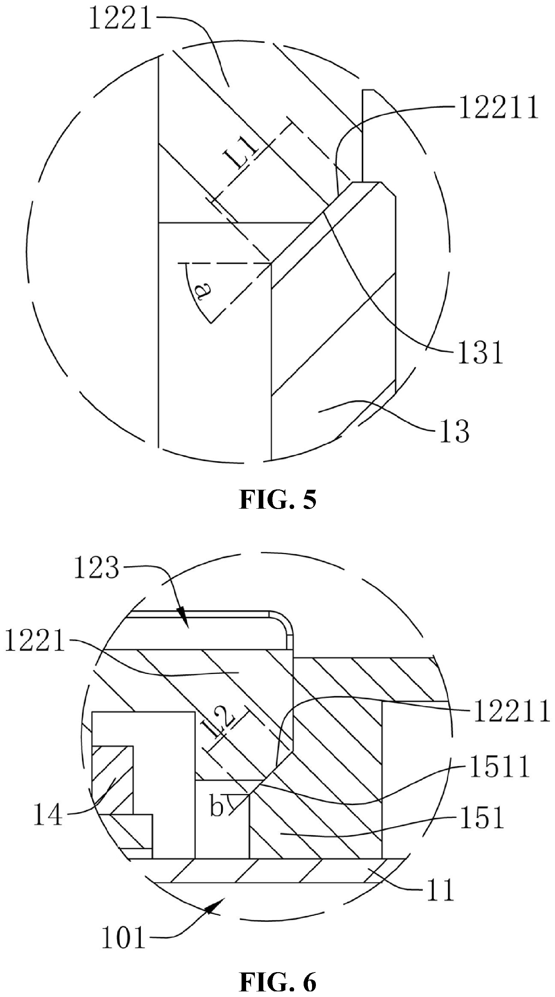

The first slope 131 refers to a slope provided on the first structural member 13. The first slope 131 is inclined relative to the axis of the inner needle 11. The first included angle is capable of being formed between first slope 131 and the axis of the inner needle 11, and the first included angle is the included angle shown by the angle a in FIG. 4 and FIG. 5. There may be a plurality of inclination directions of the first slope 131. The movement direction required for the first structural member 13 to push the outer needle 12 away from the inner needle 11 is different depending on the different inclination direction of the first slope 131.

For example, one end of the first slope 131 faces the interior of the winding needle 10, and the other end of the first slope 131 may be inclined in a direction toward the exterior of the winding needle 10 and away from the axis of the inner needle 11. In this case, the movement of the first structural member 13 toward the interior of the winding needle 10 is capable of pushing the outer needle 12 to move away from the inner needle 11. Referring to FIG. 4, a right end of the first slope 131 faces the interior of the winding needle 10, and a left end of the first slope 131 is inclined to the upper left. In this case, the movement of the first structural member 13 to the right is capable of pushing the outer needle 12 to move upward along the first slope 131 to move away from the inner needle 11.

For example, one end of the first slope 131 faces the interior of the winding needle 10, and the other end of the first slope 131 may also be inclined in a direction toward the exterior of the winding needle 10 and close to the axis of the inner needle 11. In this case, the movement of the first structural member 13 toward the exterior of the winding needle 10 is capable of pushing the outer needle 12 to move away from the inner needle 11. Referring to FIG. 5, the right end of the first slope 131 faces the interior of the winding needle 10, and the left end of the first slope 131 is inclined to the lower left. In this case, the movement of the first structural member 13 to the left is capable of pushing the outer needle 12 to move upward along the first slope 131 to move away from the inner needle 11.

In this embodiment, the first structural member 13 includes the first slope 131, and the first slope 131 abuts against the outer needle 12. In this case, the movement of the first structural member 13 is capable of pushing the outer needle 12 to move away from the inner needle 11 along the first slope 131. Meanwhile, under the action of tension of the elastic member 14 or the electrode assembly 2000, the outer needle 12 is also capable of moving toward the inner needle 11 along the first slope 131 when the first structural member 13 moves in an opposite direction, so that the outer diameter of the winding needle 10 is capable of being increased or decreased.

Referring to FIG. 2 to FIG. 5, in some embodiments, an angle range of the first included angle is 40° to 50°. For example, the angle of the first included angle may be 40°, 42°, 44°, 45°, 46°, 48°, 50°, or another value.

The first included angle is an angle formed by intersection of the first slope 131 and the axis of the inner diameter, that is, the included angle shown as the angle a in FIG. 4 and FIG. 5.

The angle of the first included angle of the first slope 131 is capable of affecting the relationship between a moving distance of the first structural member 13 and a moving distance of the outer needle 12. That is, a larger angle of the first included angle results in a larger distance that the outer needle 12 will move when the first structural member 13 moves a unit distance.

The angle of the first included angle is set to be between 40° and 50° so that the movement of the first structural member 13 is capable of quickly driving the outer needle 12 to move in the radial direction Y of the inner needle 11. This allows the outer diameter adjustment of the winding needle 10 to have a faster response speed. At the same time, it is further capable of reducing the frictional resistance between the first slope 131 and the outer needle 12, reducing frictional wear, and extending the service life.

For example, the angle of the first included angle may be 50°, and in this case, the first structural member 13 moving a small distance is capable of driving the outer needle 12 to move a large distance, so that the movement of the first structural member 13 is capable of quickly driving the outer needle 12 to move in the radial direction Y of the inner needle 11. This allows the outer diameter adjustment of the winding needle 10 to have a faster response speed.

For example, the angle of the first included angle may be 45°. This setting is capable of enabling the outer diameter adjustment of the winding needle 10 to have a faster response speed, and is further capable of reducing the friction between the outer needle 12 and the first slope 131, thereby reducing the frictional wear.

For example, the angle of the first included angle may be 40°. In this case, the frictional resistance between the first slope 131 and the outer needle 12 is smaller, and the frictional wear is lower.

This embodiment limits, by the included angle of the first slope 131, the distance by which the outer needle 12 is capable of moving in the radial direction of the inner needle 11, so that the change in the outer diameter of the winding needle 10 can be adjusted by moving the first structural member 13 by a short distance, and the adjustment of the outer diameter of the winding needle 10 is capable of having a fast response speed. Meanwhile, it is also capable of reducing resistance between the first structural member 13 and the outer needle 12, thereby reducing the frictional wear between the first structural member 13 and the outer needle 12 and improving service life of the winding needle 10.

Referring to FIG. 2 to FIG. 5, in some embodiments, a length range of the first slope 131 is 3 mm to 5 mm. For example, the length of the first slope 131 may be 3 mm, 3.5 mm, 4 mm, 4.5 mm, 5 mm, or another value.

The length of the first slope 131 is a dimension of the first slope 131 along its inclination angle, which is the dimension shown by L1 in FIG. 4 and FIG. 5.

The length of the first slope 131 is capable of affecting the relationship between the moving distance of the first structural member 13 and the moving distance of the outer needle 12. That is, a larger length of the first slope 131 results in a larger maximum distance that the outer needle 12 is capable of moving.

The length of the first slope 131 is in the range of 3 mm to 5 mm, so that the first slope 131 can not only meet the requirements of adjusting the outer diameter, but also reduce the size of the first structural member 13, thereby reducing space requirements of the first structural member 13.

For example, the length of the first slope 131 may be 3 mm, the angle of the first included angle may be 50°, and in this case, the first structural member 13 moving a small distance is capable of driving the outer needle 12 to move a large distance, so that the movement of the first structural member 13 is capable of quickly driving the outer needle 12 to move in the radial direction Y of the inner needle 11. This allows the outer diameter adjustment of the winding needle 10 to have a faster response speed.

For example, the length of the first slope 131 may be 4 mm, and the angle of the first included angle may be 45°. This setting is capable of enabling the outer diameter adjustment of the winding needle 10 to have a faster response speed, and is further capable of reducing the friction between the outer needle 12 and the first slope 131, thereby reducing the frictional wear.

For example, the length of the first slope 131 may be 5 mm, and the angle of the first included angle may be 40°. In this case, the frictional resistance between the first slope 131 and the outer needle 12 is smaller, and the frictional wear is lower.

The technical solution of this embodiment provides the length range of the first slope 131 to limit, by the length of the first slope 131, the distance by which the outer needle 12 is capable of moving in the radial direction of the inner needle 11, thereby limiting a variation range of the outer diameter of the winding needle 10 and reducing the occurrence of tab misalignment in the winding process of the electrode assembly 2000.

Referring to FIG. 2 to FIG. 6, in some embodiments, the winding needle 10 further includes a second structural member 151, the second structural member 151 and the first structural member 13 are respectively arranged at two opposite ends of the inner needle 11 in the axial direction of the inner needle 11, and the second structural member 151 abuts against the outer needle 12 at least in the axial direction of the inner needle 11. The first structural member 13 is capable of moving relative to the second structural member 151 in the axial direction of the inner needle 11.

The second structural member 151 refers to a structure in the winding needle 10 configured to cooperate with the first structural member 13 to support the outer needle 12. The second structural member 151 may be connected to the inner needle 11, or to another structure of the winding needle 10, and the second structural member 151 may also be an independent member. The second structural member 151 may be a rod-shaped structure, a block-shaped structure, or a structure of another shape. A material of the second structural member 151 may include plastic, metal, or another material.

The second structural member 151 abuts against the outer needle 12, and since there are at least two outer needles 12, there may be only one second structural member 151 abutting against each of the outer needles 12. There may also be two or more second structural members 151, so that each of the outer needles 12 is capable of corresponding to at least one of the second structural members 151. In a case where the second structural member 151 cooperates with the first structural member 13, each of the outer needles 12 at least has two supported portions, so that the outer needle 12 is capable of moving stably in the radial direction of the inner needle 11.

The second structural member 151 at least abuts against the outer needle 12 in the axial direction X of the inner needle 11, that is, the second structural member 151 is capable of at least applying a force to the outer needle 12 in the axial direction X of the inner needle 11 and pointing to the outer needle 12. When the first structural member 13 moves in the axial direction X of the inner needle 11 and pushes the outer needle 12 to move through the first slope 131, this force is capable of balancing the force applied to the outer needle 12 by the first slope 131 that is parallel to the axial direction X of the inner needle 11, and is also capable of limiting the movement of the second structural member 151 in the axial direction X of the inner needle 11, so that the outer needle 12 is capable of moving better in the radial direction Y of the inner needle 11.

The first structural member 13 and the second structural member 151 are respectively located at both ends of the inner needle 11 in the axial direction X of the inner needle 11, so that the first structural member 13 and the second structural member 151 support the opposite sides of the outer needle 12, thereby being capable of improving the stability of the outer needle 12 during movement and reducing the occurrence of skewing or similar issues.

The first structural member 13 is capable of moving relative to the second structural member 151 in the axial direction X of the inner needle 11. Based on the ability of the first structural member 13 to move, the second structural member 151 may be fixed relative to the winding needle 10 or may be movable relative to the winding needle 10.

In this embodiment, the first structural member 13 and the second structural member 151 are arranged at both ends of the inner needle 11, so that the first structural member 13 and the second structural member 151 are capable of respectively abutting against the two ends of the outer needle 12. In the process of the first structural member 13 moving and pushing the outer needle 12 to move in the radial direction of the inner needle 11, the outer needle 12 is capable of always abutting against the second structural member 151, so that the second structural member 151 cooperates with the first structural member 13 to support the outer needle 12, thereby being capable of increasing the stability of the outer needle 12 during movement and reducing the occurrence of skewing or similar issues of the outer needle 12 during movement.

Referring to FIG. 2 to FIG. 6, in some embodiments, the second structural member 151 includes a second slope 1511. The second slope 1511 abuts against the outer needle 12, and the second slope 1511 forms a second included angle between the axis of the inner needle 11. A projection of an intersection between a plane containing the second slope 1511 and a plane containing the first slope 131 in the radial Y of the inner needle 11 is within the middle region of the inner needle 11.

The second slope 1511 refers to a slope provided on the second structural member 151. A second included angle may be formed between the second slope 1511 and the axis of the inner needle 11, that is, the second slope 1511 is inclined relative to the axis of the inner needle 11. The second included angle is the included angle shown by the angle a in FIG. 4 and FIG. 5.

The intersection between the plane containing the second slope 1511 and the plane containing the first slope 131 means that the second slope 1511 and the first slope 131 are not parallel. The projection of the intersection in the radial direction Y of the inner needle 11 is within the middle region of the inner needle 11, that is, the first slope 131 and the second slope 1511 have opposite inclination directions. The middle region of the inner needle 11 is a region of the inner needle 11 in its axial direction X between the first structural member 13 and the second structural member 151. For example, when the first included angle is greater than 90°, the second included angle is less than 90°. This setting enables that when one end of the outer needle 12 abutting against the first slope 131 moves along the first slope 131, one end of the outer needle 12 abutting against the second slope 1511 is capable of moving synchronously along the second slope 1511. It also enables the outer needle 12 to move more smoothly and less easily tilted during the movement, so as to provide support for the electrode assembly 2000 and reduce abnormalities such as deformation of the electrode assembly 2000 in the winding process.

In this embodiment, the second slope 1511 is provided on the second structural member 151, and the intersection between the second slope 1511 and the first slope 131 is within the middle region of the inner needle 11, so that the first slope 131 and the second slope 1511 are inclined in opposite directions. In the process of the first structural member 13 moving and pushing the outer needle 12 to move, this arrangement enables the outer needle 12 to be capable of always abutting against the second slope 1511 and moving along the second slope 1511, so as to support the outer needle 12 through the second slope 1511 and improve the stability of the movement of the outer needle 12.

Referring to FIG. 2 to FIG. 6, in some embodiments, the second included angle is equal to the first included angle.

The second included angle being equal to the first included angle refers to that the second slope 1511 and the first slope 131 have the equal inclination angles. Both the first structural member 13 and the second structural member 151 abut against the outer needle 12, and therefore, the equal inclination angles of the first slope 131 and the second slope 1511 enable that when the end of the outer needle 12 abutting against the first slope 131 moves along the first slope 131, the end of the outer needle 12 abutting against the second slope 1511 is capable of moving synchronously along the second slope 1511. It also enables the outer needle 12 to move more smoothly and less easily tilted during the movement, so as to provide support for the electrode assembly 2000 and reduce abnormalities such as deformation of the electrode assembly 2000 in the winding process.

The second slope 1511 is capable of providing to the outer needle 12 a force parallel to the axial direction X of the inner needle 11. The force is capable of limiting the movement of the outer needle 12 in the axial direction X of the inner needle 11. At the same time, the second slope 1511 is further capable of providing to the outer needle 12 a force parallel to the radial direction Y of the inner needle 11. The force is capable of supporting and carrying the outer needle 12, thereby further reducing the occurrence of skewing or other issues of the outer needle 12 during movement and improving the stability of the movement of the outer needle 12.

For example, one end of the first slope 131 faces the interior of the winding needle 10, and the other end of the first slope 131 may be inclined in a direction toward the exterior of the winding needle 10 and away from the axis of the inner needle 11. In this case, one end of the second slope 1511 faces the interior of the winding needle 10, and the other end of the second slope 1511 may be inclined in a direction toward the exterior of the winding needle 10 and away from the axis of the inner needle 11. In this case, the movement of the first structural member 13 toward the second structural member 151 is capable of pushing the outer needle 12 to move stably away from the inner needle 11. Referring to FIG. 4 and FIG. 6, a right end of the first slope 131 faces the interior of the winding needle 10, a left end of the first slope 131 is inclined to the upper left, a left end of the second slope 1511 faces the interior of the winding needle 10, and a right end of the second slope 1511 is inclined to the upper right. In this case, the movement of the first structural member 13 to the right is capable of pushing the outer needle 12 to move stably upward along the first slope 131 and the second slope 1511 to move away from the inner needle 11.

In this embodiment, the second slope 1511 has an inclination angle the same as that of the first slope 131, so that in the process of the first structural member 13 moving and pushing the outer needle 12 to move, the outer needle 12 is capable of always abutting against the second slope 1511 and moving along the second slope 1511, so as to support the outer needle 12 through the second slope 1511 and improve the stability of the movement of the outer needle 12, and reduce the occurrence of skewing or similar issues of the outer needle 12 during movement.

Referring to FIG. 2 to FIG. 6, in some embodiments, the outer needle 12 is provided with two third structural members 1221, the two third structural members 1221 are arranged at both ends of the outer needle 12 in the axial direction of the inner needle 11, and the two third structural members 1221 abut against the first structural member 13 and the second structural member 151, respectively.

The third structural member 1221 refers to a structure on the outer needle 12 configured to abut against the first structural member 13. The third structural member 1221 may be fixedly connected to the outer needle 12 by welding, bonding, integral molding, or the like, or may be detachably connected to the outer needle 12 by screwing, clamping, or the like. The third structural member 1221 may be a rod-shaped structure, a block-shaped structure, or a structure of another shape. A material of the third structural member 1221 may include plastic, metal, or another material.

There are two third structural members 1221, and the two are arranged at both ends of the outer needle 12 in the axial direction X of the inner needle 11. For example, the two third structural members 1221 may be arranged at both ends of the outer needle 12 in the axial direction X of the inner needle 11, or the two third structural members 1221 may be arranged on a side of each of both ends of the outer needle 12 facing the inner needle 11. For example, the third structural members 1221 are located on the side of the outer needle 12 facing the inner needle 11, that is, the third structural members 1221 are located inside the winding needle 10, so that the side of the outer needle 12 facing the outside may be smoother, thereby reducing damage to the electrode assembly 2000 in the process of the electrode assembly 2000 being wound around the winding needle 10.

When the winding needle 10 includes the first structural member 13 and the second structural member 151, and the first structural member 13 and the second structural member 151 are respectively located at opposite ends of the inner needle 11 in its axial direction X, the two third structural members 1221 are respectively located at opposite ends of the outer needle 12 in the axial direction X of the inner needle 11, so that the two third structural members 1221 are capable of respectively abutting against the first structural member 13 and the second structural member 151. In this case, the outer needle 12 has two supported portions, so that the outer needle 12 is capable of moving more stably and is less likely to be skewed or the like.

In this embodiment, the outer needle 12 is provided with the two third structural members 1221 abutting against the first structural member 13 and the second structural member 151, respectively, so that both the first structural member 13 and the second structural member 151 are capable of supporting the outer needle 12 through the third structural members 1221, thereby being capable of increasing the stability of the outer needle 12 during movement and reducing the occurrence of skewing or similar issues of the outer needle 12 during movement.

Referring to FIG. 2 to FIG. 6, in some embodiments, the two third structural members 1221 each include a third slope 12211, one of the two third slopes 12211 is parallel to an adjacent first slope 131 and abuts against the first slope 131, and the other of the two third slopes 12211 is parallel to an adjacent second slope 1511 and abuts against the second slope 1511.

The third slope 12211 refers to a slope provided on the third structural member 1221. The third slope 12211 is parallel to the first slope 131, and the third slope 12211 abuts against the first slope 131, so that the first structural member 13 moving in the axial direction X of the inner needle 11 is capable of pushing, through the first slope 131 and the third slope 12211, the outer needle 12 to move in the radial direction Y of the inner needle 11.

For example, one end of the first slope 131 and one end the third slope 12211 may both face the interior of the winding needle 10, and the other end of the first slope 131 and the other end of the third slope 12211 may both be inclined in a direction toward the exterior of the winding needle 10 and away from the axis of the inner needle 11. Referring to FIG. 4, the right ends of the first slope 131 and the third slope 12211 both face the interior of the winding needle 10, and the left ends of the first slope 131 and the third slope 12211 are both inclined to the upper left. In this case, the movement of the first structural member 13 to the right is capable of pushing the outer needle 12 to move upward along the first slope 131 to move away from the inner needle 11.

For example, one end of the first slope 131 and one end the third slope 12211 may both face the interior of the winding needle 10, and the other end of the first slope 131 and the other end the third slope 12211 may both be inclined in a direction toward the exterior of the winding needle 10 and close to the axis of the inner needle 11. Referring to FIG. 5, the right ends of the first slope 131 and the third slope 12211 both face the interior of the winding needle 10, and the left ends of the first slope 131 and the third slope 12211 are both inclined to the lower left. In this case, the movement of the first structural member 13 to the left is capable of pushing the outer needle 12 to move upward along the first slope 131 to move away from the inner needle 11.

In one of the two third structural members 1221 adjacent to the first structural member 13, the third slope 12211 is parallel to the adjacent first slope 131, and the third slope 12211 abuts against the first slope 131 and is in surface contact with the first slope 131. In the other of the two third structural members 1221 adjacent to the second structural member 151, the third slope 12211 is parallel to the adjacent second slope 1511, and the third slope 12211 abuts against the second slope 1511 and is in surface contact with the second slope 1511. This arrangement ensures that both third structural members 1221 are in surface contact with the first structural member 13 and the second structural member 151, thereby further improving the stability of the movement of the third structural members 1221 relative to the first structural member 13 and the second structural member 151, and thus further improving the movement stability of the outer needle 12 and reducing the occurrence of skewing or similar issues of the outer needle 12.

Meanwhile, the surface contact between the third structural members 1221 and the first structural member 13 and the second structural member 151 is further capable of reducing stress concentration at the contact points, thereby reducing damage to the first structural member 13, the second structural member 151, and the third structural members 1221, and extending the service life of the winding needle 10.

In this embodiment, the third slopes 12211 are provided on the third structural members 1221, and the two third slopes 12211 are respectively parallel to the adjacent first slope 131 or second slope 1511. This ensures surface contact between the third structural member 1221 and the first structural member 13, as well as between the third structural member and the second structural member 151, thereby being capable of enhancing the stability of the contact between the third structural member 1221 and the first structural member 13, and between the third structural member 1221 and the second structural member 151, and being further capable of enhancing the stability of the outer needle 12 during movement and reducing the occurrence of skewing or similar issues of the outer needle 12 during movement.

Referring to FIG. 2 and FIG. 3, in some embodiments, the first structural member 13 is fixedly connected to the inner needle 11; the winding needle 10 further includes a driving assembly 16, and the driving assembly 16 is configured to drive the inner needle 11 to move in the axial direction of the inner needle 11, so as to push the outer needle 12 away from the inner needle 11 in the radial direction of the inner needle 11 by means of the first structural member 13.

The driving assembly 16 refers to a structure in the winding needle 10 configured to drive the inner needle 11 to move. The driving assembly 16 may include a cylinder, an electric telescopic cylinder, or another linear feed structure, and may also include a gear rack structure in cooperation with a motor, a crank slider structure in cooperation with a motor, or another structure.

The driving assembly 16 may be arranged inside the winding needle 10 or arranged outside the winding needle 10. For example, the driving assembly 16 is arranged on one side outside the winding needle 10 in the axial direction of the inner needle 11.

The first structural member 13 is fixedly connected to the inner needle 11, so that the driving assembly 16 driving the inner needle 11 to move is capable of driving the first structural member 13 to move synchronously. Since the size of the winding needle 10 is usually small, this arrangement allows the driving assembly 16 to be arranged outside the winding needle 10, rather than inside the winding needle 10, thereby reducing the difficulty of deploying the driving assembly 16 and reducing the need for internal space of the winding needle 10.

In this embodiment drives, the driving assembly 16 drives the inner needle 11 to move, and the inner needle 11 drives the first structural member 13 to move, so that the first structural member 13 is capable of pushing the outer needle 12 to move, thereby achieving the effect of adjusting the outer diameter of the winding needle 10.

Referring to FIG. 2 and FIG. 3, in some embodiments, an air intake hole 1211 is provided on the outer needle 12; at least two of the outer needles 12 are capable of enclosing an airflow space 102, the airflow space 102 is in communication with the air intake hole 1211, and the airflow space 102 is configured to be in communication with an air extraction apparatus to form a negative pressure in the airflow space 102.

The air intake hole 1211 refers to a hole structure opened on the outer needle 12, and gas outside the winding needle 10 is capable of entering the interior of the winding needle 10 through the air intake hole 1211. The air intake hole 1211 may be a square hole, a round hole, or a hole structure in another shape, and the air intake hole 1211 may be a straight hole, a stepped hole, a conical hole, or a hole structure in another shape. There may be one air intake hole 1211, or there may be two or more air intake holes. When there are two or more air intake holes 1211, the plurality of air intake holes 1211 may be evenly arrayed on the outer needle 12, or they may be irregularly arranged on the outer needle 12.

At least two outer needles 12 are capable of enclosing the airflow space 102, and the inner needle 11 is located within the airflow space 102. Depending on the shape of the outer needles 12, the airflow space 102 may be a cylindrical space, a prismatic space, or a space of another shape. The airflow space 102 is in communication with the air intake hole 1211 so that the gas outside the winding needle 10 is capable of entering the airflow space 102 through the air intake hole 1211.

The airflow space 102 is configured to be in communication with the air extraction apparatus, and the air extraction apparatus is a structure configured to extract gas from the airflow space 102 to the outside of the winding needle 10. The air extraction apparatus may include a fan, a vacuum pump, or another structure capable of transmitting gas.

The air extraction apparatus may be arranged in the airflow space 102 or arranged outside the winding needle 10. For example, the air extraction apparatus is arranged outside the winding needle 10.

The air extraction apparatus is capable of extracting the gas in the airflow space 102 to the outside of the winding needle 10 and creating a negative pressure in the airflow space 102. When the electrode assembly 2000 does not cover the winding needle 10, the air extraction apparatus is capable of drawing the gas outside the winding needle 10 into the airflow space 102 through the air intake hole 1211 and extracting the gas in the airflow space 102 to the outside of the winding needle 10. When the electrode assembly 2000 covers at least a portion of the winding needle 10, the negative pressure created by the air extraction apparatus is capable of adsorbing the portion of the electrode assembly 2000 in contact with the winding needle 10 onto the outer needle 12, thereby fixing a corresponding portion of the electrode assembly 2000.

It is understandable that, the movement of the outer needle 12 in the radial direction Y of the inner needle 11 may cause a gap between adjacent outer needles 12. However, due to the small outer diameter requirement of the winding needle 10, the moving distance of the outer needle 12 is also small, and the gap between the adjacent outer needles 12 is also small. By increasing the power of the air extraction apparatus, the winding needle 10 is still capable of effectively adsorbing the electrode assembly 2000 onto the winding needle 10. At the same time, because of the winding of the electrode assembly 2000, the electrode assembly 2000 is capable of covering most of the gap between the adjacent outer needles 12, thereby further reducing the damage caused by the negative pressure.

In this embodiment, the air extraction apparatus is capable of extracting the air in the airflow space 102 to the outside of the winding needle 10, so as to form the negative pressure in the airflow space 102. The negative pressure in the airflow space 102 is capable of adsorbing the electrode assembly 2000 near the air intake hole 1211 onto the outer needle 12, so as to achieve a function of fixing the electrode assembly 2000.

Referring to FIG. 2 and FIG. 3, in some embodiments, there are at least two air intake holes 1211, and the at least two air intake holes 1211 are evenly distributed on the outer needle 12.

There are at least two air intake holes 1211, that is, the quantity of the air intake holes 1211 may be two, or three, or more.

When the electrode assembly 2000 is adsorbed onto the winding needle 10 under the negative pressure, a main stress-bearing portion of the electrode assembly 2000 is a part near the air intake hole 1211. Accordingly, the air intake holes 1211 evenly distributed on the outer needle 12 enable the stresses on the electrode assembly 2000 more uniform, thereby being capable of reducing the deformation and similar issues that may be caused by localized concentrated stress on the electrode assembly 2000, and also allowing the electrode assembly 2000 to be better adsorbed and attached to the outer needle 12, thus reducing the occurrence of folding or similar issues caused by insufficient localized stress on the electrode assembly 2000.

In this embodiment, there are at least two air intake holes 1211, which allows the outer needle 12 to have at least two positions for adsorbing the electrode assembly 2000, thereby improving the stability of fixing the electrode assembly 2000 and enhancing the fixing effect. The at least two air intake holes 1211 are evenly distributed, so that adsorption forces applied on the electrode assembly 2000 can be more uniform, thereby reducing abnormalities such as deformation that may be caused by uneven stress on the electrode assembly 2000.

Referring to FIG. 2 and FIG. 3, in some embodiments, an aperture range of the air intake hole 1211 is from 1 mm to 2 mm. For example, the aperture of the air intake hole 1211 may be 1 mm, 1.2 mm, 1.4 mm, 1.5 mm, 1.6 mm, 1.8 mm, 2 mm, or another value.

The aperture of the air intake hole 1211 is a diameter of the air intake hole 1211. Referring to FIG. 3, a dimension R shown in the figure is the aperture of the air intake hole 1211. The aperture of the air intake hole 1211 ranging from 1 mm to 2 mm allows the negative pressure in the airflow space 102 to be capable of adsorbing the electrode assembly 2000 near the air intake hole 1211 and to prevent part of the electrode assembly 2000 or the separator from being deformed and entering the air intake hole 1211, thereby reducing damage to the electrode assembly 2000.

A distance between two adjacent air intake holes 1211 is 2 mm to 4 mm. For example, the distance between the two adjacent air intake holes 1211 may be 2 mm, 2.5 mm, 3 mm, 3.5 mm, 4 mm, or another value.

The distance between the two adjacent air intake holes 1211 is set as a distance between centers of the two adjacent air intake holes 1211. Referring to FIG. 3, a dimension W shown in the figure is the distance between the two adjacent air intake holes 1211. Since a strength of an adsorption force of the negative pressure in the airflow space 102 on the electrode assembly 2000 is related to a total area of the air intake holes 1211, the distance between the two adjacent air intake holes 1211 ranging from 2 mm to 4 mm not only allows the electrode assembly 2000 to be better adsorbed on the outer needle 12, but also allows the outer needle 12 to have a certain strength, so as to reduce the negative impact of the air intake holes 1211 on the strength of the outer needle 12, while allowing the outer needle 12 to provide better support for the electrode assembly 2000.

For example, the aperture of the air intake hole 1211 may be 1 mm, and the distance between the two adjacent air intake holes 1211 may be 2 mm. In this case, the aperture of the air intake hole 1211 is small, the adsorption force on the electrode assembly 2000 at a position of a single air intake hole 1211 is small, and the electrode assembly 2000 is less prone to deformation. Meanwhile, the quantity of air intake holes 1211 is large, so as to adsorb the electrode assembly 2000 onto the outer needle 12.

For example, the aperture of the air intake hole 1211 may be 1.5 mm, and the distance between the two adjacent air intake holes 1211 may be 3 mm. In this case, the aperture of the air intake hole 1211 is increased, the adsorption force on the electrode assembly 2000 at the position of the single air intake hole 1211 is increased, and the electrode assembly 2000 is less prone to deformation. Meanwhile, the electrode assembly 2000 is capable of being better adsorbed.

For example, the aperture of the air intake hole 1211 may be 2 mm, and the distance between the two adjacent air intake holes 1211 may be 4 mm. In this case, the aperture of the air intake hole 1211 is large, the adsorption force on the electrode assembly 2000 at the position of the single air intake hole 1211 is large, thereby being capable of better adsorbing the electrode assembly 2000.

This embodiment provides the aperture range and the spacing range of some air intake holes 1211, so that the air intake holes 1211 are capable of stably adsorbing the electrode assembly 2000 and reducing the occurrence of deformation of the electrode assembly 2000 caused by the electrode assembly 2000 or the separator entering the air intake holes 1211.

In some embodiments, the negative pressure ranges from -50 KPa to -75 KPa. For example, the negative pressure range may be -50 KPa, -55 KPa, -60 KPa, -65 KPa, -70 KPa, -75 KPa, or another value.

The air pressure outside the winding needle 10 is the normal atmospheric pressure, and therefore, a greater absolute value of the negative pressure indicates a better adsorption performance of the winding needle 10 on the electrode assembly 2000. The negative pressure ranges from -50 KPa to -75 KPa, so that the winding needle 10 is not only capable of adsorbing the electrode assembly 2000 relatively stably, but also capable of reducing the occurrence of deformation of the electrode assembly 2000 caused by the electrode assembly 2000 or the separator entering the air intake hole 1211.

For example, the negative pressure value in the airflow space 102 may be -50 KPa. In this case, the winding needle 10 is not only capable of better reducing the deformation of the electrode assembly 2000, but also capable of stably adsorbing the electrode assembly 2000.

For example, the negative pressure value in the airflow space 102 may be -62.5 KPa. In this case, the winding needle 10 is not only capable of well reducing the deformation of the electrode assembly 2000, but also capable of relatively stably adsorbing the electrode assembly 2000.

For example, the negative pressure value in the airflow space 102 may be -75 KPa. In this case, the winding needle 10 is not only capable of more stably adsorbing the electrode assembly 2000, but also capable of reducing the deformation of the electrode assembly 2000.

This embodiment provides the range of the negative pressure in the airflow space 102, enabling the winding needle 10 to stably adsorb the electrode assembly 2000 while reducing the occurrence of the deformation of the electrode assembly 2000 due to the electrode assembly 2000 or separator entering the air intake holes 1211.

Referring to FIG. 2 and FIG. 3, in some embodiments, an airflow channel 101 in communication with the airflow space 102 is opened in the inner needle 11. One end of the airflow channel 101 is used to be in communication with the air extraction apparatus so as to extract gas in the airflow space 102 through the airflow channel 101 to the outside of the winding needle 10.

The airflow channel 101 refers to a channel structure opened inside the inner needle 11. The airflow channel 101 may be formed by a tube embedded in the inner needle 11, or it may be formed by opening a hole structure directly in the inner needle 11. The airflow channel 101 may be a linear structure or a curved structure. In the radial direction of the airflow channel 101, a cross-sectional shape of the airflow channel 101 may be square, circular, or other shapes.

The airflow channel 101 is in communication with the airflow space 102, and one end of the airflow channel 101 is in communication with the air extraction apparatus, so that the air extraction apparatus is capable of drawing the gas in the airflow space 102 into the airflow channel 101 and drawing the gas in the airflow channel 101 out of the winding needle 10. The end of the airflow channel 101 away from the air extraction apparatus may be directly in communication with the airflow space 102, or one or more through holes may be opened on the sidewall of the inner needle 11 facing the outer needle 12, so that the airflow channel 101 and the airflow space 102 are in communication with each other through the through holes.

In this embodiment, the airflow channel 101 is opened in the inner needle 11 so that the air extraction apparatus is capable of extracting the gas in the airflow space 102 through the airflow channel 101 and forming the negative pressure, thereby facilitating the air extraction apparatus to extract the gas from the airflow space 102. The overall size of the winding needle 10 is generally small, and therefore, the arrangement is further capable of reducing occupation of the airflow channel 101 in the internal space of the winding needle 10, thereby being capable of reducing the difficulty of arranging the various structures inside the winding needle 10 and saving space.

Referring to FIG. 2 and FIG. 3, in some embodiments, the outer needle 12 includes a middle portion 121, and both ends of the middle portion 121 are connected to end portions 122 in the axial direction of the inner needle 11, with the end portions 122 abutting against the first structural member 13. The air intake hole 1211 is at least opened in the middle portion 121, and the airflow space 102 is at least formed between the middle portions 121 of different outer needles 12.

The middle portion 121 and the end portion 122 are partial structures of the outer needle 12. The end portions 122 are arranged at both ends of the middle portion 121 in the axial direction X of the inner needle 11.

Depending on the shape of the winding needle 10, the middle portion 121 may be an arc-shaped plate structure, a planar plate structure, or a structure in another shape. A material of the middle portion 121 may include metal, plastic, or another material.

The end portions 122 are located at both ends of the middle portion 121 and are mainly configured to abut against the first structural member 13 and the second structural member 151, and therefore, the electrode assembly 2000 is mainly in contact with the middle portion 121 in the winding process. Accordingly, the shape of the end portions 122 may be the same as or similar to that of the middle portion 121, or may be different from that of the middle portion 121. For example, in order to reduce damage to the electrode assembly 2000, the end portions 122 and the sidewall of the middle portion 121 facing away from the winding needle 10 have the same shape. When the end portions 122 are connected to the middle portion 121, this arrangement is capable of reducing misalignment of sidewalls of the end portions 122 and the sidewall of the middle portion 121 at connection points, thereby reducing the damage to the electrode assembly 2000.

The end portion 122 may be detachably connected to the middle portion 121 by means of screwing, snap-fitting, and the like, or may be fixedly connected to the middle portion 121 by means of welding, bonding, integral molding, and the like. A material of the end portion 122 may include metal, plastic, or another material. The material of the end portion 122 may be the same as the material of the middle portion 121 or different from the material of the middle portion 121.

The air intake hole 1211 is at least opened on the middle portion 121, that is, the air intake hole 1211 may be opened only on the middle portion 121, or the air intake hole 1211 may be opened on both the middle portion 121 and the end portion 122. The airflow space 102 is formed at least between the middle portions 121 of different outer needles 12, that is, the airflow space 102 may be formed only between the middle portions 121 of different outer needles 12, or may be formed between the middle portion 121 and the end portion 122 of different outer needles 12.

In this embodiment, the outer needle 12 includes the middle portion 121 and an end plate, so that the end portion 122 is capable of abutting against the first structural member 13, to facilitate the first structural member 13 to push the outer needle 12 to move. The air intake hole 1211 is opened on the middle portion 121, so that the winding needle 10 can fix the electrode assembly 2000 near the middle portion 121, thereby enabling the winding needle 10 to fix the electrode assembly 2000 more stably.

In some embodiments, a thickness of the middle portion 121 ranges from 5 mm to 8 mm. For example, the thickness of the middle portion 121 may be 5 mm, 5.5 mm, 6 mm, 6.5 mm, 7 mm, 7.5 mm, 8 mm, or another value.

The thickness of the middle portion 121 is a dimension of the middle portion 121 in the radial Y direction of the inner needle 11. The middle portion 121 is mainly configured to provide support for the electrode assembly 2000 in the winding process of the electrode assembly 2000, and therefore, the thickness of the middle portion 121 is in a range of 5 mm to 8 mm. Therefore, the middle portion 121 is capable of having a strong strength and further capable of reducing the space occupation, so that the airflow is capable of being smoothly drawn out from the airflow space 102 to the outside of the winding needle 10, while also reducing the weight of the outer needle 12.

For example, the thickness of the middle portion 121 may be 5 mm. In this case, the thickness of the middle portion 121 is relatively small, the overall thickness of the winding needle 10 is relatively light, and the airflow space 102 is relatively large, so that the negative pressure formed by the air extraction apparatus is capable of better adsorbing the electrode assembly 2000 at each air intake hole 1211.

For example, the thickness of the middle portion 121 may be 6.5 mm. In this case, the thickness of the middle portion 121 is increased, the strength of the winding needle 10 is increased, and the middle portion 121 has a strong strength while also being capable of better adsorbing the electrode assembly 2000.

For example, the thickness of the middle portion 121 may be 8 mm. In this case, the thickness of the middle portion 121 is large, the strength of the winding needle 10 is relatively strong, so as to better support the electrode assembly 2000 wound on the winding needle 10.

In some embodiments, the end portion 122 is detachably connected to the middle portion 121. The end portion 122 may be detachably connected to the middle portion 121 by screwing, clamping, or other methods. For example, the end portion 122 is connected to the middle portion 121 by a bolt. A bolt connected portion between the end portion 122 and the middle portion 121 may be located on the side of the outer needle 12 facing the inner needle 11, so as to reduce the damage to the electrode assembly 2000 by the outer needle 12 during the winding of the electrode assembly 2000.

The end portions 122 abut against the first structural member 13 and the second structural member 151, and therefore, the outer diameter of the winding needle 10 may change frequently in the winding process of the winding needle 10. In this case, a wear rate of the end portion 122 is likely to be faster than that of the middle portion 121. The end portion 122 is detachably connected to the middle portion 121 to facilitate the mounting, replacement, and maintenance of the end portion 122, and also to reduce the maintenance cost of the winding needle 10, while also facilitating the overall assembling of the winding needle 10.

In some embodiments, an unloading groove 123 is further provided on a circumferential side surface of the outer needle 12, and in the axial direction of the inner needle 11, at least one end of the unloading groove 123 is in communication with the space outside the winding needle 10.

The unloading groove 123 refers to a groove structure on the winding needle 10 configured to accommodate a material taking apparatus. The unloading groove 123 is opened on the circumferential side surface of the outer needle 12, that is, an opening of the unloading groove 123 faces outward the exterior of the winding needle 10. After the electrode assembly 2000 is wound around the outer needle 12, the electrode assembly 2000 is capable of closing the opening of the unloading groove 123. A length direction of the unloading groove 123 may be parallel to the axial direction X of the inner needle 11, or may be set at an angle to the axial direction X of the inner needle 11. At least one end of the unloading groove 123 in the axial direction X of the inner needle 11 is in communication with the space outside the winding needle 10 so that the material taking apparatus can enter the unloading groove 123. In a depth direction of the unloading groove 123, a cross-sectional shape of the unloading groove 123 may be square, semi-circular, trapezoidal, or other shapes.

In such winding needle 10, the material taking apparatus is capable of entering the unloading groove 123 in the axial direction X of the inner needle 11. The material taking apparatus is further capable of moving away from the axis of the inner needle 11, and is capable of moving out of the winding needle 10 from the opening of the unloading groove 123 to attach to and contact with the electrode assembly 2000. After attaching to and contacting with the electrode assembly 2000, the material taking apparatus is capable of continuing to move away from the axis of the inner needle 11 and disengaging the electrode assembly 2000 from the outer needle 12, so as to remove the electrode assembly 2000 from the outer needle 12.

When the outer needle 12 is formed by splicing the end portion 122 and the middle portion 121, a partial structure of the unloading groove 123 may be arranged on both the end portion 122 and the middle portion 121, so that the partial structures are spliced to form a complete unloading groove 123 after the end portion 122 is mounted on the middle portion 121.

The winding needle 10 includes at least two outer needles 12, and therefore, each of the outer needles 12 may be provided on only one unloading groove 123 or two or more unloading grooves 123.

In this embodiment, the unloading groove 123 is provided on the outer needle 12 to facilitate the material taking apparatus to enter the wound electrode assembly 2000 and remove the electrode assembly 2000 from the winding needle 10.

Referring to FIG. 1 to FIG. 6, in some embodiments, the winding needle 10 includes an inner needle 11, an outer needle 12, and a second structural member 151.

There are two outer needles 12, and the two outer needles 12 are arranged on a circumferential side of the inner needle 11 in a circumferential direction of the inner needle 11. The two outer needles 12 are capable of moving toward or away from the inner needle 11. The two outer needles 12 moving toward the inner needle 11 are capable of being attached together and merged to form a cylindrical structure. An airflow space 102 is formed between the two outer needles 12.

The outer needle 12 includes a middle portion 121 and end portions 122 arranged at both ends of the middle portion 121 in an axial direction X of the inner needle 11. The end portions 122 are each provided with a third structural member 1221, and the third structural member 1221 is provided with a third slope 12211. The middle portion 121 is provided with a plurality of uniformly arranged air intake holes 1211, and the air intake holes 1211 are in communication with the airflow space 102.

The outer needle 12 is provided with hanging parts on a side facing the inner needle 11. An elastic member 14 is a rubber ring and surrounds all the hanging parts, that is, the hanging parts are capable of extending into the rubber ring and abutting against an inner wall of the rubber ring.

The inner needle 11 is provided with a first structural member 13, the first structural member 13 is provided with a first slope 131, and the first slope 131 abuts against the third slope 12211. The inner needle 11 is capable of moving in its axial direction X. An airflow channel 101 is opened inside the inner needle 11 in its axial direction X, the airflow channel 101 is in communication with the airflow space 102 through a through hole opened in the inner needle 11, and one end of the airflow channel 101 is capable of extending to the outside of the winding needle 10.

The second structural member 151 is provided with a second slope 1511, and the second slope 1511 abuts against another third slope 12211.

The second structural member 151 is an independent member. The second structural member 151 is arranged on a seat 15. The seat 15 is arranged on one side of the winding needle 10 in the axial direction X of the inner needle 11. The second structural member 151 is arranged on the seat 15. The inner needle 11 is capable of moving relative to the seat 15 in its axial direction X. The seat 15 is provided with a driving assembly 16 connected to the inner needle 11. The driving assembly 16 is capable of driving the inner needle 11 to move in its axial direction X.

The seat 15 is further provided with a cavity 152 therein, one end of the inner needle 11 extends into the cavity 152 and is in communication with the cavity 152, and the movement of the inner needle 11 in its axial direction X does not easily cause one end of the inner needle 11 to come out of the cavity 152. The seat 15 is further provided with an interface 153 in communication with the cavity 152, and an external air extraction apparatus is capable of being in communication with the interface 153.

The movement of the inner needle 11 toward the seat 15 is capable of pushing the outer needle 12 away from the inner needle 11 in a radial Y direction of the inner needle 11 through the first slope 131, the second slope 1511, and the third slope 12211, and causing the elastic member 14 to deform. The movement of the inner needle 11 away from the seat 15 is capable of causing the first slope 131 and the second slope 1511 to tend to be separated from the corresponding third slopes 12211. In this case, under the action of the elastic member 14, the third slope 12211 abuts against the corresponding first slope 131 or second slope 1511, so that the outer needle 12 moves toward the inner needle 11 in the radial direction Y of the inner needle 11.

Upon activation of the external air extraction apparatus, the gas in the airflow space 102 is capable of being drawn into the airflow channel 101 through the through holes. The gas in the airflow channel 101 is sequentially drawn into the air extraction apparatus through the cavity 152 and the interface 153, and finally discharged to the space outside the winding needle 10, so as to form a negative pressure in the airflow space 102. When the electrode assembly 2000 is located adjacent to the winding needle 10, the negative pressure is capable of adsorbing and fixing a portion of the electrode assembly 2000 close to the winding needle 10 on the outer needle 12, thereby facilitating winding of the electrode assembly 2000 and reducing abnormalities such as slippage in the winding process of the electrode assembly 2000.

In a second aspect, some embodiments of the present application further provide a winding device 1000, including the winding needle 10 according to some embodiments of the first aspect. Tabs in an electrode assembly 2000 formed by the winding device are not easily misaligned, thereby being capable of mitigating the possibility of shortened battery life, reduced capacity, safety risks, and the like caused by tab misalignment.

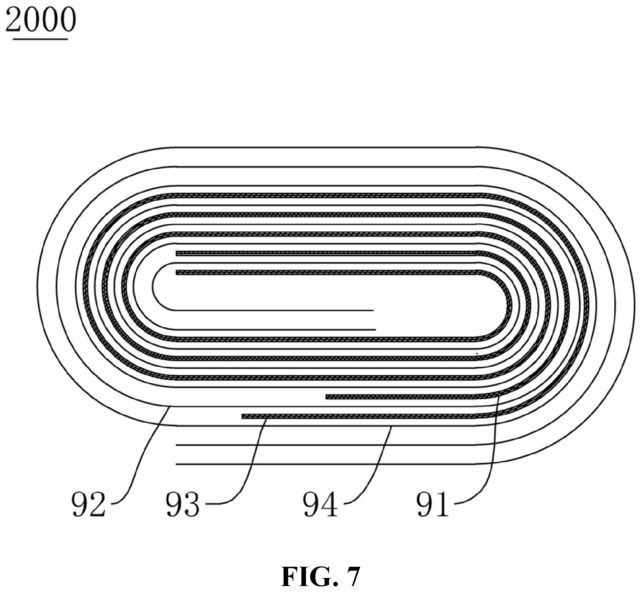

Referring to FIG. 7, the winding device 1000 is configured to wind to form the electrode assembly 2000. The electrode assembly 2000 includes a first electrode plate 91, a second electrode plate 93, a first separator 92, and a second separator 94. The first electrode plate 91 and the second electrode plate 93 have opposite polarities. In other words, one of the first electrode plate 91 and the second electrode plate 93 is an anode electrode plate, and the other is a cathode electrode plate. The first separator 92 is formed between the first electrode plate 91 and the second electrode plate 93, and the second separator 94 is formed on one side of the first electrode plate 91 or the second electrode plate 93 opposite to the first separator 92.

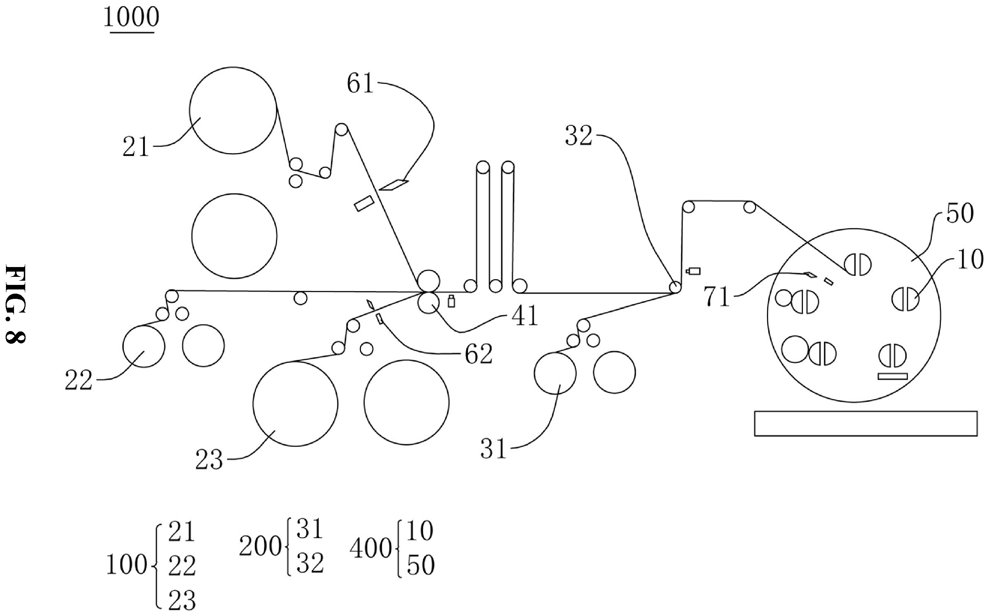

Referring to FIG. 8 to FIG. 12, in some embodiments, the winding device 1000 includes a first unwinding mechanism 100, a second unwinding mechanism 200, a composite mechanism 300, and a winding mechanism 400. The first unwinding mechanism 100 is configured to unwind the first electrode plate 91, the first separator 92, and the second electrode plate 93. The second unwinding mechanism 200 is configured to unwind the second separator 94. The composite mechanism 300 is configured to at least press the first electrode plate 91 and the first separator 92 together. The winding mechanism 400 is located downstream of the composite mechanism 300. The winding mechanism 400 is configured to wind the first electrode plate 91, the first separator 92, the second electrode plate 93, and the second separator 94 to form the electrode assembly 2000.

The first unwinding mechanism 100 refers to a mechanism configured to unwind the first electrode plate 91, the first separator 92, and the second electrode plate 93. The first unwinding mechanism 100 may include a plurality of unwinding members, and the plurality of unwinding members may be configured to unwind the first electrode plate 91, the first separator 92, and the second electrode plate 93, respectively. The unwinding members may be rollers, reels, shafts, or other structures.

The composite mechanism 300 refers to a mechanism for pressing at least the first electrode plate 91 and the first separator 92 together. That is, the composite mechanism 300 may be configured to press the first electrode plate 91 and the first separator 92 together, or may be configured to press the first electrode plate 91, the first separator 92, and the second electrode plate 93 together. The composite mechanism 300 may include one or a plurality of composite assemblies, and the composite assemblies may include two composite rollers arranged opposite each other.

The composite mechanism 300 may first composite the first electrode plate 91 and the first separator 92. In this case, the first electrode plate 91 and the first separator 92 are capable of being conveyed between two composite rollers. The two composite rollers press the first electrode plate 91 and the first separator 92 together to composite the first electrode plate 91 and the first separator 92. When the composite mechanism 300 is configured to composite the first electrode plate 91 and the first separator 92, the composite mechanism 300 can also composite the second electrode plate 93 and the already composited first electrode plate 91 and first separator 92.

It is understandable that, the composite mechanism 300 may also first composite the first separator 92 and the second electrode plate 93, and then composite the first electrode plate 91 and the already composited first separator 92 and second electrode plate 93.

The composite mechanism 300 is further capable of directly compositing the first electrode plate 91, the first separator 92, and the second electrode plate 93. In this case, the first electrode plate 91, the first separator 92, and the second electrode plate 93 are conveyed between the two composite rollers, and the two composite rollers press the first electrode plate 91, the first separator 92, and the second electrode plate 93 to achieve composite of the first electrode plate 91, the first separator 92, and the second electrode plate 93.

The second unwinding mechanism 200 is configured to provide the second separator 94 and unwind the second separator 94. The second unwinding mechanism 200 may include a roller, or other structures such as a reel and a shaft. The second unwinding mechanism 200 may be arranged downstream of the composite mechanism 300 or arranged on one side of the winding mechanism 400. The second unwinding mechanism 200 may include a passive structure, that is, when another structure (such as the winding mechanism 400) in the winding device 1000 pulls the second separator 94, the second unwinding mechanism 200 is caused to perform unwinding and feeding. The second unwinding mechanism 200 may also include an active structure, for example, controlling the unwinding and feeding of the second unwinding mechanism 200 through a motor or another structure.

The winding mechanism 400 refers to a mechanism in the winding device 1000 that winds the electrode plate and the separator. The winding mechanism 400 is located downstream of the composite mechanism 300, and the downstream refers to a region through which the composite plate body passes after being output from the composite mechanism 300. The winding mechanism 400 and the composite mechanism 300 are spaced apart. Optionally, the winding mechanism 400 and the composite mechanism 300 are spaced apart in the horizontal direction, so that the winding mechanism 400 and the composite mechanism 300 can each obtain a large layout space, which facilitates the arrangement of various components. The winding mechanism 400 may include a winding needle 10 configured to wind the first electrode plate 91, the first separator 92, the second electrode plate 93, and the second separator 94. The winding mechanism 400 may further include a pressing member, an adhesive applicator, and a feeding member that are configured for finishing processing.

The winding device 1000 further includes a frame, and the frame provides a mounting environment for the composite mechanism 300, the second unwinding mechanism 200, and the winding mechanism 400. The frame may be a rectangular box structure, and the frame may also be another structure. A material of the frame may include metal, plastic, or another material. The frame may include a vertical plate, and the composite mechanism 300, the second unwinding mechanism 200, and the winding mechanism 400 are capable of being mounted on the vertical plate.

In this embodiment, two of the first electrode plate 91, the first separator 92, and the second electrode plate 93 are first composited, and then the first electrode plate 91, the first separator 92, the second electrode plate 93, and the second separator 94 are wound on the winding mechanism 400. The composite mechanism 300 and the winding mechanism 400 of the winding device 1000 are capable of being spaced apart, each obtaining a relatively large space. Moreover, the winding device 1000 does not need to separately feed a cathode electrode plate, an anode electrode plate, and the separators to the winding mechanism 400, which solves the problem of space congestion above the winding mechanism 400, optimizes the layout of the winding device 1000, and facilitates flexible arrangement of various components.

Referring to FIG. 8 to FIG. 12, in some embodiments, the winding mechanism 400 includes a base 50 and at least two winding needles 10, the winding needles 10 are rotatably connected to the base 50, and the base 50 is configured to drive different winding needles 10 to move alternately to one side of the composite mechanism 300.

The base 50 refers to a structure in the winding mechanism 400 that provides a fixed foundation for the winding needle 10 or other structures. A shape of the base 50 may be circular, square, or another shape. A material of the base 50 may be metal, plastic, or another shape.

The winding needle 10 is arranged on the base 50 and is rotatable relative to the base 50 to wind the first electrode plate 91, the first separator 92, the second electrode plate 93, and the second separator 94. At least two winding needles 10 are provided, for example, there may be two, three, or more winding needles 10.

The base 50 is capable of driving the winding needle 10 to move, and driving different winding needles 10 to move alternately on one side of the composite mechanism 300, so that when one winding needle 10 is located on one side of the composite mechanism 300, another winding needle 10 is capable of being located in another position for finishing processing. This arrangement allows the finishing processing of the wound electrode assembly 2000 to be carried out in a position other than the composite mechanism 300, without occupying the space on one side of the composite mechanism 300, thereby freeing up the space on the other side of the composite mechanism 300 such that another empty winding needle 10 can move to one side of the composite mechanism 300 and wind the first electrode plate 91, the first separator 92, the second electrode plate 93, and the second separator 94.

The finishing processing refers to performing pressing, adhesive applying, and other processing on a tail of the wound electrode assembly 2000. A finishing structure may be arranged on one side of the base 50 to perform the finishing processing on the wound electrode assembly 2000. The finishing structure may include a pressing member, such as a pressing roller or a pressing plate, configured to press the wound electrode assembly 2000. The finishing structure may further include an adhesive application member, such as a glue brush or a glue application roller, configured to fix the electrode plate and the separator. The finishing structure may further include an unloading structure, such as a robotic arm, configured to remove the electrode assembly 2000 from the winding needle 10.

It is understandable that, with the winding mechanism 400 downstream of the composite mechanism 300, the base 50 may drive the winding needle 10 to be located on either side of the composite mechanism 300. For example, referring to FIG. 8, with a direction from left to right in the figure being from upstream to downstream, the winding needle 10 may be located at the lower right of the composite mechanism 300, or at the upper right, below, in or other positions of the composite mechanism 300.

For example, taking the base 50 being provided with two winding needles 10 as an example, when one of the winding needles 10 is located beside the composite mechanism 300, the winding needle 10 is capable of winding the first electrode plate 91, the first separator 92, the second electrode plate 93, and the second separator 94 to obtain a wound electrode assembly 2000. In this case, the other winding needle 10 is in another position to facilitate the finishing structure to perform finishing processing on the wound electrode assembly 2000 on the winding needle 10. When the winding needle 10 beside the composite mechanism 300 finishes the winding, the wound electrode assembly 2000 on the other winding needle 10 in the other position is also finished and unloaded. That is, the winding needle 10, which is in the other position in this case, is left idle. Then, the base 50 is moved so that the idle winding needle 10 may move to be located beside the composite mechanism 300 and wind the first electrode plate 91, the first separator 92, the second electrode plate 93, and the second separator 94. After finishing the winding, the winding needle 10 moves to another position for finishing processing. For most of the time, the winding needle 10 is present beside the composite mechanism 300, and the winding needle 10 is not present only during alternative motion of the winding needle 10. The first unwinding mechanism 100 and the second unwinding mechanism 200 only need to wait for a short time when the winding needle 10 moves alternately.

There is a distance between the composite mechanism 300 and the winding needle 10, and therefore, continuous unwinding of the first unwinding mechanism 100 and the second unwinding mechanism 200 without deceleration can be achieved by controlling the distance. That is, after one winding needle 10 finishes winding, the first unwinding mechanism 100 and the second unwinding mechanism 200 cause the first electrode plate 91, the first separator 92, the second electrode plate 93, and the second separator 94 to move within the distance between the composite mechanism 300 and the winding needle 10. Before the first electrode plate 91, the first separator 92, the second electrode plate 93, and the second separator 94 move to the position of the winding needle 10, the idle winding needle 10 is capable of moving to one side of the composite mechanism 300 and receiving the first electrode plate 91, the first separator 92, the second electrode plate 93, and the second separator 94.

In this embodiment, the base 50 is provided and the winding needles 10 are arranged on the base 50, so that the base 50 is capable of driving the winding needles 10 to move alternately on one side of the composite mechanism 300. This allows finishing processing after the winding needles 10 wind the first electrode plate 91, the first separator 92, the second electrode plate 93, and the second separator 94 to be performed in another position, so that the feeding of the electrode plates and separators does not need to wait for the finishing processing to be completed, thereby reducing a feeding waiting time of the electrode plates and separators.

Referring to FIG. 8, a first embodiment of the present application proposes a winding device 1000. A first unwinding mechanism 100 of the winding device 1000 includes a first unwinding assembly 21, a second unwinding assembly 22, and a third unwinding assembly 23. The first unwinding assembly 21 is configured to unwind a first electrode plate 91. The second unwinding assembly 22 is configured to unwind a first separator 92. The third unwinding assembly 23 is configured to unwind a second electrode plate 93. The composite mechanism 300 includes a first composite assembly 41, and the first composite assembly 41 is configured to press the first electrode plate 91, the first separator 92, and the second electrode plate 93 together to form a first composite plate body.

The first unwinding assembly 21, the second unwinding assembly 22, and the third unwinding assembly 23 may each include one or a plurality of rollers. In an initial state of the winding device 1000, the first electrode plate 91 is wound on the first unwinding assembly 21, the first separator 92 is wound on the second unwinding assembly 22, and the second electrode plate 93 is wound on the third unwinding assembly 23. In an operating state of the winding device 1000, the first unwinding assembly 21 is configured to unwind the first electrode plate 91, the second unwinding assembly 22 is configured to unwind the first separator 92, the third unwinding assembly 23 is configured to unwind the second electrode plate 93, and the first composite assembly 41 is configured to receive the first electrode plate 91, the first separator 92, and the second electrode plate 93, and press the first electrode plate 91, the first separator 92, and the second electrode plate 93 together.

The first composite assembly 41 may include two composite rollers arranged opposing to each other. The first electrode plate 91, the first separator 92, and the second electrode plate 93 are conveyed to a position between the two composite rollers. The two composite rollers cooperate to apply a certain pressure to the first electrode plate 91, the first separator 92, and the second electrode plate 93 to composite the first electrode plate 91, the first separator 92, and the second electrode plate 93. The first separator 92 is located between the first electrode plate 91 and the second electrode plate 93 to isolate the first electrode plate 91 from the second electrode plate 93. The first electrode plate 91 and the second electrode plate 93 are fixed together by an adhesive on the first separator 92 to obtain the first composite plate body.

In the first composite plate body, the first electrode plate 91, the first separator 92, and the second electrode plate 93 are laminated sequentially, and both sides of the first separator 92 are sticky, so that the relative positions of the first electrode plate 91, the first separator 92, and the second electrode plate 93 are fixed and they are not prone to moving relative to each other.

The first composite assembly 41 may further include a plurality of conveying rollers. For example, one or a plurality of conveying rollers are arranged between the first unwinding assembly 21 and the composite rollers to convey the first electrode plate 91 on the first unwinding assembly 21 to the composite rollers. One or a plurality of conveying rollers are arranged between the second unwinding assembly 22 and the composite rollers to convey the first separator 92 on the second unwinding assembly 22 to the composite rollers. One or a plurality of conveying rollers are arranged between the third unwinding assembly 23 and the composite rollers to convey the second electrode plate 93 on the third unwinding assembly 23 to the composite rollers.

For example, the first separator 92 needs to be arranged between the first electrode plate 91 and the second electrode plate 93, and therefore, the second unwinding assembly 22 may be located between the first unwinding assembly 21 and the third unwinding assembly 23, so that the spatial layout of the first composite assembly 41 is more reasonable. It is understandable that the unwinding assemblies and the first composite assembly 41 may be flexibly arranged and are not limited to the above-mentioned arrangement. Alternatively, in a height direction of the winding device 1000, the first unwinding assembly 21, the second unwinding assembly 22, and the third unwinding assembly 23 are arranged sequentially from top to bottom, so that the first electrode plate 91, the first separator 92, and the second electrode plate 93 are laminated from top to bottom. The first electrode plate 91 may be an anode electrode plate, the second electrode plate 93 may be a cathode electrode plate, and in the first composite plate body formed, a length of the anode electrode plate is greater than a length of the cathode electrode plate, so that the anode electrode plate is capable of wrapping the cathode electrode plate. It is understandable that in other embodiments, the first electrode plate 91 may be configured as a cathode electrode plate and the second electrode plate 93 as an anode electrode plate.

In this embodiment, the first composite assembly 41 is capable of compositing the first electrode plate 91, the first separator 92, and the second electrode plate 93 in one step. The composite method is simple and the composite efficiency is high.

Referring to FIG. 8, in some embodiments, the winding device 1000 further includes a first electrode plate cut-off assembly 61 and a second electrode plate cut-off assembly 62. The first electrode plate cut-off assembly 61 is arranged between the first unwinding assembly 21 and the first composite assembly 41, and the first electrode plate cut-off assembly 61 is configured to cut off the first electrode plate 91. The second electrode plate cut-off assembly 62 is arranged between the third unwinding assembly 23 and the first composite assembly 41, and the second electrode plate cut-off assembly 62 is configured to cut off the second electrode plate 93.

The electrode plate cut-off assembly refers to a structure in the winding device 1000 configured to cut off an electrode plate. Both the first electrode plate cut-off assembly 61 and the second electrode plate cut-off assembly 62 may include a variety of cut-off structures, such as a linear cutter that reciprocates in a straight line and a cam cutter that rotates around an axis. The straight cutter is used in conjunction with a fixed cutter, and the straight cutter is capable of moving toward or away from the fixed cutter.

In this embodiment, the winding device 1000 further includes the first electrode plate cut-off assembly 61 and the second electrode plate cut-off assembly 62 to cut off the first electrode plate 91 and the second electrode plate 93 respectively. This allows the first electrode plate cut-off assembly 61 and the second electrode plate cut-off assembly 62 to cut off the first electrode plate 91 and the second electrode plate 93 before the first electrode plate 91, the first separator 92, and the second electrode plate 93 are composited, thereby being capable of easily making the length of the separator greater than the length of the electrode plate, thus meeting use requirements of the electrode assembly 2000.

Referring to FIG. 8, in some embodiments, the second unwinding mechanism 200 is arranged between the first composite assembly 41 and the winding mechanism 400, that is, the second unwinding mechanism 200 is located downstream of the first composite assembly 41 and upstream of the winding mechanism 400.

The second unwinding mechanism 200 is arranged downstream of the first composite assembly 41, so that the second unwinding mechanism 200 can not only unwind the second separator 94, but also convey the second separator 94 together with the first composite plate body to the winding mechanism 400.

The second unwinding mechanism 200 includes a separator unwinding assembly 31 and a conveying roller 32. The separator unwinding assembly 31 is configured to unwind the second separator 94, while the conveying roller 32 is configured to converge the second separator 94 with the first composite plate body to form a laminated plate body, and to convey the laminated plate body to the winding mechanism 400.

The second unwinding mechanism 200 includes a separator unwinding assembly 31 and a conveying roller 32. The conveying roller 32 is configured to converge the first composite plate body and the second separator 94, enabling the first composite plate body and the second separator 94 to be laminated and form a laminated plate body. The laminated plate body is then conveyed to the winding mechanism 400 for winding.

For example, the winding device 1000 may further include a separator composite assembly (not shown in the figure). The separator composite assembly is arranged between the conveying roller 32 and the winding mechanism 400, and the separator composite assembly is configured to composite the second separator 94 with the first composite plate body. The separator composite assembly may be located upstream or downstream of the conveying roller 32. The separator composite assembly may include two composite rollers arranged opposite to each other. The two composite rollers apply a pressure to the second separator 94 and the first composite plate body to composite the second separator 94 and the first composite plate body, so that the second separator 94 and the first composite plate body are capable of being pre-composited before entering the winding mechanism 400 and are not easily displaced.

It is understandable that, the separator composite assembly may also be omitted, that is, it is unnecessary to composite the second separator 94 with the first composite plate body before winding. In this case, the second separator 94 and the first composite plate body may be composited at the winding needle 10.

In this embodiment, the second unwinding mechanism 200 is located downstream of the first composite assembly 41. The second electrode plate 93 provided by the second unwinding mechanism 200 is capable of being laminated with the first composite plate body and wound together. The second unwinding mechanism 200 is capable of being spaced apart from the winding mechanism 400 to avoid the problem of space congestion above the winding mechanism 400. The various unwinding assemblies are spaced apart from the winding mechanism 400, so that the layout is flexible and convenient.

Referring to FIG. 8, in some embodiments, the winding device 1000 further includes a first separator cut-off assembly 71, and the first separator cut-off assembly 71 is arranged adjacent to the winding mechanism 400 and is configured to cut off the first separator 92 and/or the second separator 94.

The first separator 92 and the second separator 94 are both supplied in continuous coils, the first separator 92 and the second separator 94 need to be cut off by using the first separator cut-off assembly 71 after the first separator 92 and the second separator 94 are laminated with the first electrode plate 91 and the second electrode plate 93.

There may be one first separator cut-off assembly 71, and in this case, the first separator cut-off assembly 71 cuts off the first separator 92 and the second separator 94 simultaneously. There may also be at least two first separator cut-off assemblies 71, and in this case, one first separator cut-off assembly 71 is configured to cut off the first separator 92 and the other first separator cut-off assembly 71 is configured to cut off the second separator 94.

The first separator cut-off assembly 71 is arranged at the winding mechanism 400, so that the first separator cut-off assembly 71 is capable of cutting the separators either before or after the first separator 92 and the second separator 94 are wound. The specific position of the first separator cut-off assembly 71 may be flexibly set.

The first separator cut-off assembly 71 may include a variety of cut-off structures, such as a linear cutter that reciprocates in a straight line, a cam cutter that rotates around an axis, and a laser cutting structure.

For example, there is one first separator cut-off assembly 71 located on one side of the base 50. After the first electrode plate 91, the first separator 92, the second electrode plate 93, and the second separator 94 are wound onto the winding needle 10, the base 50 drives the winding needle 10 to move toward the finishing structure. In this case, the first separator cut-off assembly 71 is capable of cutting off the first separator 92 and the second separator 94 so that the finishing structure can perform the finishing processing on the wound electrode assembly 2000.

In this embodiment, the first separator cut-off assembly 71 is arranged at the winding mechanism 400, enabling the winding device 1000 to cut off the separators either before or after the electrode assembly 2000 is wound. This eliminates the need for dedicated separator cut-off time, thereby improving the overall winding efficiency.

Referring to FIG. 8, in the winding device 1000 provided in the first embodiment, the first unwinding assembly 21, the second unwinding assembly 22, and the third unwinding assembly 23 respectively unwind the first electrode plate 91, the first separator 92, and the second electrode plate 93, and enable the first electrode plate 91, the first separator 92, and the second electrode plate 93 to be pressed together at the first composite assembly 41 to form a first composite plate body.

The first electrode plate cut-off assembly 61 and the second electrode plate cut-off assembly 62 are configured to cut off the first electrode plate 91 and the second electrode plate 93, respectively, so that the first electrode plate 91 and the second electrode plate 93 are cut off before being composited with the first separator 92.

The second unwinding mechanism 200 is arranged between the first composite assembly 41 and the winding mechanism 400, so that the first composite plate body are capable of forming a laminated plate body with the second separator 94 before entering the winding mechanism 400.

The first separator cut-off assembly 71 is configured to cut off the first separator 92 and the second separator 94 in the process of the base 50 driving the winding needle 10 to move towards the finishing structure, so that the finishing structure may perform the finishing processing on the wound electrode assembly 2000.

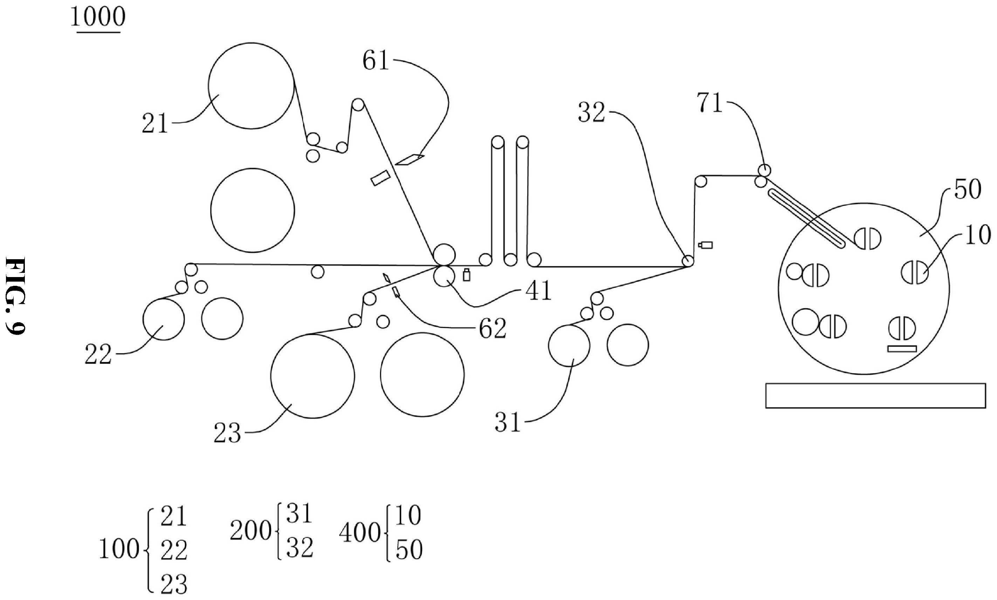

Referring to FIG. 9, a second embodiment of the present application proposes a winding device 1000, including a first unwinding mechanism 100, a second unwinding mechanism 200, a composite mechanism 300, and a winding mechanism 400. Unlike the first embodiment, a first separator cut-off assembly 71 is located upstream of the winding mechanism 400.

For example, the winding device 1000 may further include a delivery member arranged between the first separator cut-off assembly 71 and the winding mechanism 400. The delivery member is configured to convey the first separator 92 and/or the second separator 94 to the winding mechanism 400. The delivery member may also be configured to deliver the first electrode plate 91 and the second electrode plate 93. That is, the delivery member is configured to deliver a laminated plate body from the first separator cut-off assembly 71 to the winding needle 10. The delivery member may include a variety of delivery structures, such as a gripper, a delivery belt, and a vacuum adsorption delivery belt. The delivery member may also deliver a composite plate body or the second separator 94, and is not limited to delivering the laminated plate body.

In the second embodiment, the second unwinding mechanism 200 is arranged downstream of the first composite assembly 41. The second unwinding mechanism 200 includes a separator unwinding assembly 31 and a first conveying roller 32. The separator unwinding assembly 31 is configured to unwind the second separator 94, and the first conveying roller 32 is configured to converge the second separator 94 with the first composite plate body to form a laminated plate body.

It is understandable that, the delivery member may also be omitted. For example, the first separator cut-off assembly 71 is adjacent to the winding mechanism 400, and the cut-off electrode assembly 2000 is capable of being directly fixed and wound by the winding needle 10.

The first separator cut-off assembly 71 is located upstream of the winding mechanism 400. The first separator cut-off assembly 71 is capable of cutting off the first separator 92 and the second separator 94 before the laminated plate body is wound. The first separator cut-off assembly 71 may include a variety of cut-off structures, such as a linear cutter that reciprocates in a straight line, a cam cutter that rotates around an axis, and a laser cutting structure.

After the current winding needle 10 winds the electrode assembly 2000, the first separator cut-off assembly 71 cuts off the first separator 92 and the second separator 94, and the delivery member delivers a head end of the next electrode assembly 2000 to the idle winding needle 10, so that the winding needle 10 can wind the next electrode assembly 2000.

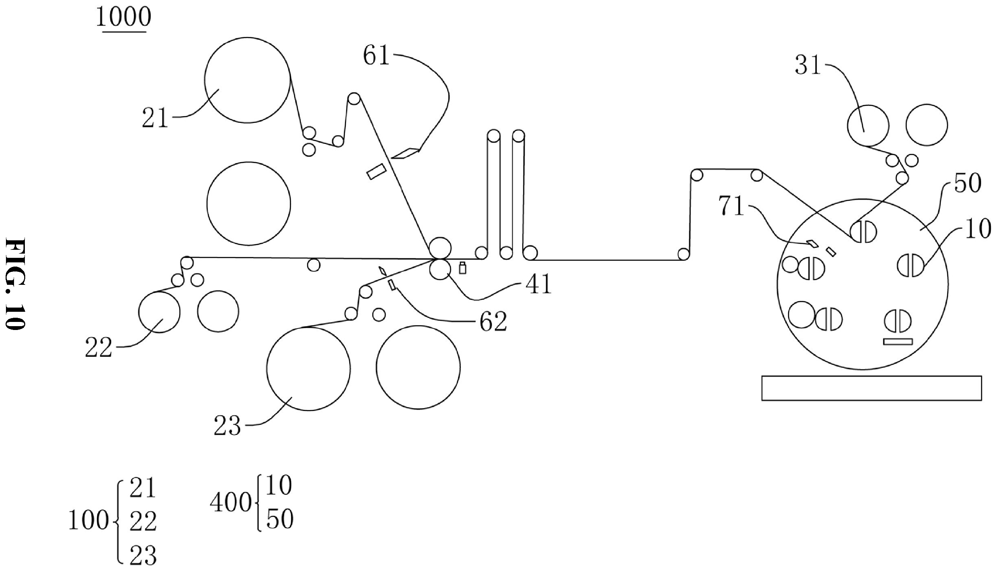

Referring to FIG. 10, a third embodiment of the present application proposes a winding device 1000, including a first unwinding mechanism 100, a second unwinding mechanism 200, a composite mechanism 300, and a winding mechanism 400. Unlike the first embodiment, the second unwinding mechanism 200 is arranged on one side of the winding mechanism 400, and the second unwinding mechanism 200 is configured to convey the second separator 94 to the winding needle 10. In this case, the first composite plate body converges with the second separator 94 on the winding needle 10.

In the third embodiment, the second unwinding mechanism 200 directly conveys the second separator 94 to the winding mechanism 400, so that the first composite plate body conveyed by the first composite assembly 41 and the second separator 94 conveyed by the second unwinding mechanism 200 are wound together and composited at the winding needle 10 to form the electrode assembly 2000.

As shown in FIG. 10, the first separator cut-off assembly 71 is located on one side of the base 50. After the first composite plate body and the second separator 94 are wound around the winding needle 10, the base 50 drives the winding needle 10 to move toward the finishing structure. In this case, the first separator cut-off assembly 71 is capable of cutting off the first separator 92 and the second separator 94, so that the finishing structure can perform finishing processing on the wound electrode assembly 2000.

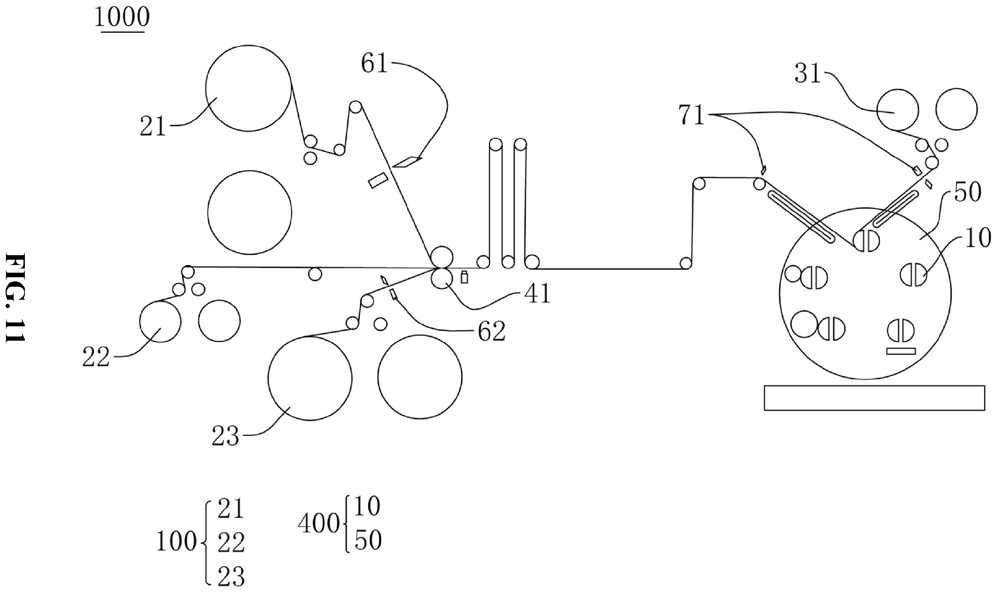

Referring to FIG. 11, a fourth embodiment of the present application proposes a winding device 1000, including a first unwinding mechanism 100, a second unwinding mechanism 200, a composite mechanism 300, and a winding mechanism 400. The second unwinding mechanism 200 is arranged on one side of the winding mechanism 400, and the second unwinding mechanism 200 is configured to convey a second separator 94 to the winding needle 10, so that the first composite plate body converges with the second separator 94 on the winding needle 10. Unlike the third embodiment, a first separator cut-off assembly 71 in the winding device 1000 is different.

In the fourth embodiment, the first separator cut-off assembly 71 is arranged upstream of the winding mechanism 400. There are two first separator cut-off assemblies 71. One of the first separator cut-off assemblies 71 is arranged between the first composite assembly 41 and the winding mechanism 400 and is configured to cut off the first separator 92. The other of the first separator cut-off assemblies 71 is arranged between the second unwinding mechanism 200 and the winding mechanism 400 and is configured to cut off the second separator 94.

For example, the winding device 1000 may also include two delivery members, each delivery member being arranged between the corresponding first separator cut-off assembly 71 and the winding mechanism 400, one of the delivery members is configured to deliver the first composite plate body and the other of the delivery members is configured to deliver the second separator 94. The first separator cut-off assembly 71 may include a cam cutter, and may also include a linear cutter that reciprocates in a straight line, a laser cutter, or the like.

In this embodiment, the first separator 92 and the second separator 94 are cut off before being wound, the first separator cut-off assembly 71 does not occupy the space of the winding mechanism 400, and there is no need to avoid the winding needle 10 moving along with the base 50.

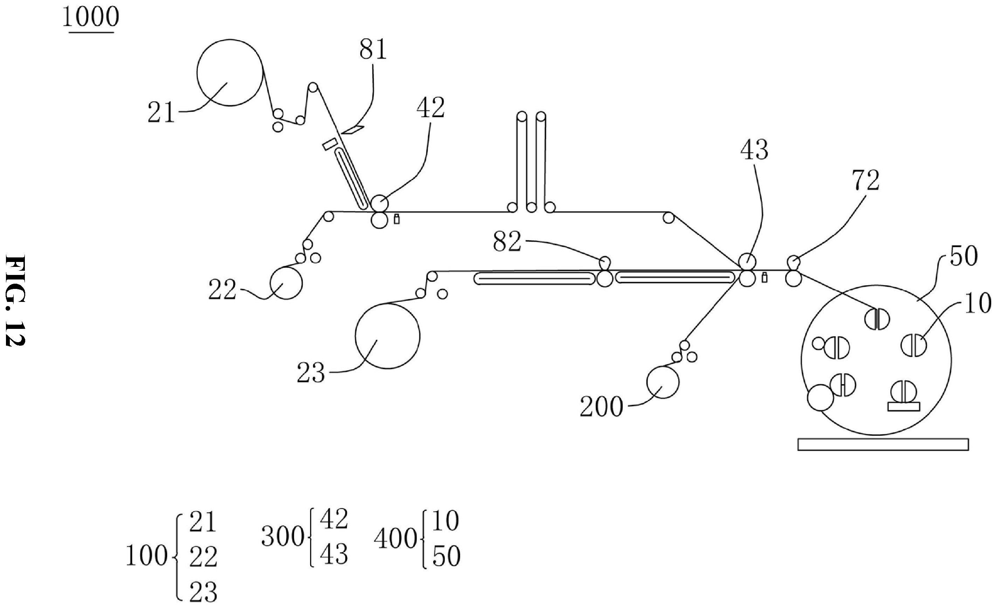

Referring to FIG. 12, a fifth embodiment of the present application proposes a winding device 1000, where a first unwinding mechanism 100 includes a first unwinding assembly 21 and a second unwinding assembly 22. The first unwinding assembly 21 is configured to unwind a first electrode plate 91, and the second unwinding assembly 22 is configured to unwind a first separator 92. A composite mechanism 300 includes a second composite assembly 42, and the second composite assembly 42 is configured to press the first electrode plate 91 and the first separator 92 together to form a second composite plate body. Unlike the first to fourth embodiments, in the fifth embodiment, the second composite assembly 42 of the composite mechanism 300 is configured to only composite the first electrode plate 91 and the first separator 92.

The second composite assembly 42 is configured to press the first electrode plate 91 and the first separator 92 together to form the second composite plate body.

The second composite assembly 42 may include two composite rollers arranged opposite to each other. When the first electrode plate 91 and the first separator 92 are conveyed to a position between the two composite rollers, the two composite rollers cooperate with each other to apply a certain pressure to the first electrode plate 91 and the first separator 92, so that the first electrode plate 91 and the first separator 92 are composited. The first electrode plate 91 and the first separator 92 are fixed together by an adhesive to form the second composite plate body, that is, the second composite plate body is formed by laminating the first electrode plate 91 and the first separator 92.

The second composite assembly 42 may further include a plurality of conveying rollers. For example, one or a plurality of conveying rollers are arranged between the first unwinding assembly 21 and the composite rollers to convey the first electrode plate 91 on the first unwinding assembly 21 to the composite rollers. One or a plurality of conveying rollers are arranged between the second unwinding assembly 22 and the composite rollers to convey the first separator 92 on the second unwinding assembly 22 to the composite rollers.

In this embodiment, the second composite assembly 42 is capable of first compositing the first electrode plate 91 and the first separator 92, so as to facilitate subsequent composite with the second electrode plate 93 and the second separator 94. This is capable of reducing the possibility of poor composite effect that may occur when two electrodes and two separators are composited at the same composite structure.

Referring to FIG. 12, in the fifth embodiment, the first unwinding mechanism 100 further includes a third unwinding assembly 23 configured to unwind the second electrode plate 93. The composite mechanism 300 further includes a third composite assembly 43, and the third composite assembly 43 is configured to press the second composite plate body, the second electrode plate 93, and the second separator 94 together to form an electrode assembly 2000.

The third composite assembly 43 is configured to press the second composite plate body, the second electrode plate 93, and the second separator 94 together to form the electrode assembly 2000.

The third composite assembly 43 may include two composite rollers arranged opposite to each other. When the second composite plate body, the second electrode plate 93, and the second separator 94 are conveyed to a position between the two composite rollers, the two composite rollers cooperate with each other to apply a certain pressure to the second composite plate body, the second electrode plate 93, and the second separator 94, so that the second composite plate body, the second electrode plate 93, and the second separator 94 are composited. The second composite plate body is fixed to the second electrode plate 93 by an adhesive on the first separator 92 to obtain the electrode assembly 2000.

In electrode assembly 2000, the second composite plate body, the second electrode plate 93, and the second separator 94 are laminated sequentially. The second composite plate body includes the first electrode plate 91 and the first separator 92 laminated together. That is, in the electrode assembly 2000, the first electrode plate 91, the first separator 92, the second electrode plate 93, and the second separator 94 are laminated sequentially, and both sides of each of the first separator 92 and the second separator 94 are sticky, so that the relative positions of the first electrode plate 91, the first separator 92, the second electrode plate 93, and the second separator 94 are fixed and they are not prone to moving relative to each other.

In this embodiment, the third composite assembly 43 is capable of compositing the second composite plate body, the second electrode plate 93, and the second separator 94 to form the electrode assembly 2000. Compared with the solution where the electrode plates and the separators are composited at the winding needle 10, this arrangement is capable of reducing the functional requirements for the winding needle 10, thereby facilitating an increase in the winding speed of the winding needle 10 and improving the production efficiency. Meanwhile, it also enables the composite of the electrode plates and the separators to be completed before winding, which reduces the occurrence of displacement of the electrode plates and separators in the winding process.

Referring to FIG. 12, in the fifth embodiment, the winding device 1000 further includes a third electrode plate cut-off assembly 81 and a fourth electrode plate cut-off assembly 82. The third electrode plate cut-off assembly 81 is arranged between the first unwinding assembly 21 and the second composite assembly 42, and the third electrode plate cut-off assembly 81 is configured to cut off the first electrode plate 91. The fourth electrode plate cut-off assembly 82 is arranged between the third unwinding assembly 23 and the third composite assembly 43, and the fourth electrode plate cut-off assembly 82 is configured to cut off the second electrode plate 93.

The first electrode plate cut-off assembly 61 is similar to the second electrode plate cut-off assembly 62. The electrode plate cut-off assembly refers to a structure in the winding device 1000 configured to cut off an electrode plate. Both the third electrode plate cut-off assembly 81 and the fourth electrode plate cut-off assembly 82 may include a variety of cut-off structures, such as a linear cutter that reciprocates in a straight line and a cam cutter that rotates around an axis. The straight cutter is used in conjunction with a fixed cutter, and the straight cutter is capable of moving toward or away from the fixed cutter.

In this embodiment, the winding device 1000 further includes the third electrode plate cut-off assembly 81 and the fourth electrode plate cut-off assembly 82 to cut off the first electrode plate 91 and the second electrode plate 93 respectively. This allows the third electrode plate cut-off assembly 81 to cut off the first electrode plate 91 before the first electrode plate 91 and the first separator 92 are composited, and allows the fourth electrode plate cut-off assembly 82 to cut off the second electrode plate 93 before the electrode assembly 2000, the second electrode plate 93, and the second separator 94 are composited, thereby being capable of easily making a length of the separator greater than a length of the electrode plate, thus meeting use requirements of the electrode assembly 2000.

Referring to FIG. 12, in some embodiments, the winding device 1000 further includes a second separator cut-off assembly 72, and the second separator cut-off assembly 72 is arranged between the third composite assembly 43 and the winding mechanism 400.

The second separator cut-off assembly 72 may include a variety of cut-off structures, such as a linear cutter that reciprocates in a straight line, a cam cutter that rotates around an axis, and a laser cutting structure.

The second separator cut-off assembly 72 is arranged between the third composite assembly 43 and the winding mechanism 400. After the second composite plate body is composited with the second electrode plate 93 and the second separator 94, the second separator cut-off assembly 72 is capable of simultaneously cutting off the first separator 92 and the second separator 94, thereby facilitating the winding of the electrode assembly 2000 by the winding needle 10 and enabling the finishing processing at the finishing structure.

In this embodiment, the second separator cut-off assembly 72 is arranged between the third composite assembly 43 and the winding mechanism 400, so that the second separator cut-off assembly 72 cuts off the separator after the electrode assembly 2000, the second electrode plate 93, and the second separator 94 are composited. This arrangement is capable of easily making the length of the separator greater than the length of the electrode plate, thus meeting the use requirements of the electrode assembly 2000.

Referring to FIG. 8, a winding device 1000 provided in a first embodiment of the present application includes a first unwinding mechanism 100, a second unwinding mechanism 200, a composite mechanism 300, and a winding mechanism 400. The first unwinding mechanism 100 includes a first unwinding assembly 21, a second unwinding assembly 22, and a third unwinding assembly 23. The composite mechanism 300 includes a first composite assembly 41. The winding mechanism 400 includes a base 50 and at least two winding needles 10 arranged on the base 50. The second unwinding mechanism 200 is configured to convey the second separator 94 and allow the second separator 94 to converge with a first composite plate body on the winding needles 10.

The first unwinding assembly 21, the second unwinding assembly 22, and the third unwinding assembly 23 are arranged upstream of the first composite assembly 41, while the winding mechanism 400 is arranged downstream of the first composite assembly 41. The second unwinding mechanism 200 is arranged upstream of the winding mechanism 400, and the second unwinding mechanism 200 is located downstream of the first composite assembly 41.

The winding device 1000 further includes a first separator cut-off assembly 71, and the first separator cut-off assembly 71 is located on one side of the base 50. After the first composite plate body and the second separator 94 are wound around the winding needles 10, the base 50 drives the winding needles 10 to move toward a finishing structure. In this case, the first separator cut-off assembly 71 is capable of cutting off the first separator 92 and the second separator 94, so that the finishing structure can perform finishing processing on the wound electrode assembly 2000.

A working principle of the winding device 1000 is as follows:
The first electrode plate 91, the second electrode plate 93, and the first separator 92 are unwound, the first electrode plate 91 and the second electrode plate 93 sandwiching the first separator 92 are composited together through a first composite assembly 41 to form a first composite plate body. The first composite plate body is then converged with the second separator 94 to form a laminated plate body.

After the first winding needle 10 winds the electrode assembly 2000, the remaining first separator 92 and second separator 94 are not wound. In this case, the winding needle 10 moves along with the base 50 to the finishing structure. The first separator cut-off assembly 71 cuts off the remaining separator so that the finishing structure performs finishing processing on the electrode assembly 2000 on the winding needle 10, thereby separating the separator and reducing the possibility of the electrode assembly 2000 spreading out. After the electrode assembly 2000 on the winding needle 10 is finished and unloaded, the winding needle 10 is left idle and is capable of moving along with the base 50 to one side of the first composite assembly 41 for the next winding, and so on.

Referring to FIG. 9, a winding device 1000 provided in a second embodiment of the present application includes a first unwinding mechanism 100, a second unwinding mechanism 200, a composite mechanism 300, and a winding mechanism 400. The first unwinding mechanism 100 includes a first unwinding assembly 21, a second unwinding assembly 22, and a third unwinding assembly 23. The composite mechanism 300 includes a first composite assembly 41. The winding mechanism 400 includes a base 50 and at least two winding needles 10 arranged on the base 50. The second unwinding mechanism 200 is configured to convey the second separator 94 and allow the second separator 94 to converge with a first composite plate body on the winding needles 10.

The first unwinding assembly 21, the second unwinding assembly 22, and the third unwinding assembly 23 are arranged upstream of the first composite assembly 41, while the winding mechanism 400 is arranged downstream of the first composite assembly 41. The second unwinding mechanism 200 is arranged upstream of the winding mechanism 400, and the second unwinding mechanism 200 is located downstream of the first composite assembly 41.

The winding device 1000 further includes a first separator cut-off assembly 71, and the first separator cut-off assembly 71 is arranged upstream of the base 50, and is configured to cut off the first separator 92 and the second separator 94 before a laminated plate body is wound.

A working principle of the winding device 1000 is as follows:
The first electrode plate 91, the second electrode plate 93, and the first separator 92 are unwound, the first electrode plate 91 and the second electrode plate 93 sandwiching the first separator 92 are composited together through a first composite assembly 41 to form a first composite plate body. The first composite plate body is then converged with the second separator 94 to form a laminated plate body. Then, the laminated plate body passes through the first separator cut-off assembly 71 and is wound onto the winding needle 10. After one end of the laminated plate body is fixed to the winding needle 10 or wound onto the winding needle 10, the first separator cut-off assembly 71 cuts off the first separator 92 and the second separator 94.

After the first winding needle 10 winds the electrode assembly 2000, the winding needle 10 moves along with the base 50 to the finishing structure. The finishing structure performs finishing processing on the electrode assembly 2000 on the winding needle 10, thereby separating the separator and reducing the possibility of the electrode assembly 2000 spreading out. After the electrode assembly 2000 on the winding needle 10 is finished and unloaded, the winding needle 10 is left idle and is capable of moving along with the base 50 to one side of the first composite assembly 41 for the next winding, and so on.

Referring to FIG. 10, a winding device 1000 provided in a third embodiment of the present application includes a first unwinding mechanism 100, a second unwinding mechanism 200, a composite mechanism 300, and a winding mechanism 400. The first unwinding mechanism 100 includes a first unwinding assembly 21, a second unwinding assembly 22, and a third unwinding assembly 23. The composite mechanism 300 includes a first composite assembly 41. The winding mechanism 400 includes a base 50 and at least two winding needles 10 arranged on the base 50. The second unwinding mechanism 200 is configured to convey the second separator 94 to the winding needles 10, and in this case, a first composite plate body converges with the second separator 94 on the winding needles 10.

The first unwinding assembly 21, the second unwinding assembly 22, and the third unwinding assembly 23 are arranged upstream of the first composite assembly 41, while the winding mechanism 400 is arranged downstream of the first composite assembly 41. The second unwinding mechanism 200 is arranged on one side of the winding mechanism 400.

The winding device 1000 further includes a first separator cut-off assembly 71, and the first separator cut-off assembly 71 is located on one side of the base 50. After the first composite plate body and the second separator 94 are wound around the winding needles 10, the base 50 drives the winding needles 10 to move toward a finishing structure. In this case, the first separator cut-off assembly 71 is capable of cutting off the first separator 92 and the second separator 94, so that the finishing structure can perform finishing processing on the wound electrode assembly 2000.

A working principle of the winding device 1000 is as follows:
The first electrode plate 91, the second electrode plate 93, and the first separator 92 are unwound, the first electrode plate 91 and the second electrode plate 93 sandwiching the first separator 92 are composited together through a first composite assembly 41 to form a first composite plate body. The first composite plate body is then converged with the second separator 94 at the winding needle 10 to form a laminated plate body.

After the first winding needle 10 winds the electrode assembly 2000, the remaining first separator 92 and second separator 94 are not wound. In this case, the winding needle 10 moves along with the base 50 to the finishing structure. The first separator cut-off assembly 71 cuts off the remaining separator so that the finishing structure performs finishing processing on the electrode assembly 2000 on the winding needle 10, thereby separating the separator and reducing the possibility of the electrode assembly 2000 spreading out. After the electrode assembly 2000 on the winding needle 10 is finished and unloaded, the winding needle 10 is left idle and is capable of moving along with the base 50 to one side of the first composite assembly 41 for the next winding, and so on.

Referring to FIG. 11, a winding device 1000 provided in the fourth embodiment of the present application includes a first unwinding mechanism 100, a second unwinding mechanism 200, a composite mechanism 300, and a winding mechanism 400. The first unwinding mechanism 100 includes a first unwinding assembly 21, a second unwinding assembly 22, and a third unwinding assembly 23. The composite mechanism 300 includes a first composite assembly 41. The winding mechanism 400 includes a base 50 and at least two winding needles 10 arranged on the base 50. The second unwinding mechanism 200 is configured to convey the second separator 94 to the winding needles 10, and in this case, a first composite plate body converges with the second separator 94 on the winding needles 10.

The first unwinding assembly 21, the second unwinding assembly 22, and the third unwinding assembly 23 are arranged upstream of the first composite assembly 41, while the winding mechanism 400 is arranged downstream of the first composite assembly 41. The second unwinding mechanism 200 is arranged on one side of the winding mechanism 400.

The winding device 1000 further includes a first separator cut-off assembly 71. There are two first separator cut-off assemblies 71. One of the first separator cut-off assemblies 71 is located upstream of the base 50, and is configured to cut off the first separator 92 before a laminated plate body is wound. The other one of the first separator cut-off assemblies 71 is located between the second unwinding mechanism 200 and the winding device 1000, and is configured to cut off the second separator 94.

A working principle of the winding device 1000 is as follows:
The first electrode plate 91, the second electrode plate 93, and the first separator 92 are unwound, the first electrode plate 91 and the second electrode plate 93 sandwiching the first separator 92 are composited together through a first composite assembly 41 to form a first composite plate body. The first composite plate body then passes through one of the first separator cut-off assemblies 71 by which the first separator 92 is cut off. The second separator 94 passes through the other one of the first separator cut-off assemblies 71 and is cut off. The cut-off first composite plate body is converged with the second separator 94 at the winding needle 10 to form an electrode assembly 2000 wound on the winding needles 10.

After the first winding needle 10 winds the electrode assembly 2000, the winding needle 10 moves along with the base 50 to the finishing structure. The finishing structure performs finishing processing on the electrode assembly 2000 on the winding needle 10, thereby separating the separator and reducing the possibility of the electrode assembly 2000 spreading out. After the electrode assembly 2000 on the winding needle 10 is finished and unloaded, the winding needle 10 is left idle and is capable of moving along with the base 50 to one side of the first composite assembly 41 for the next winding, and so on.

Referring to FIG. 12, a winding device 1000 provided in the fifth embodiment of the present application includes a first unwinding mechanism 100, a second unwinding mechanism 200, a composite mechanism 300, and a winding mechanism 400. The first unwinding mechanism 100 includes a first unwinding assembly 21, a second unwinding assembly 22, and a third unwinding assembly 23. The composite mechanism 300 includes a second composite assembly 42 and a third composite assembly 43. The second composite assembly 42 is configured to press a first electrode plate 91 and a first separator 92, and composite them to form a second composite plate body. The third composite assembly 43 is configured to press the second composite plate body, a second electrode plate 93, and a second separator 94, and composite them to form an electrode assembly 2000. The winding mechanism 400 includes a base 50 and at least two winding needles 10 arranged on the base 50. The second unwinding mechanism 200 is configured to convey the second separator 94 to third composite assembly 43.

The first unwinding assembly 21 and the second unwinding assembly 22 are arranged upstream of the second composite assembly 42. The third unwinding assembly 23 and the second unwinding mechanism 200 are arranged downstream of the second composite assembly 42 and arranged upstream of the third composite assembly 43. The winding mechanism 400 is arranged downstream of the third composite assembly 43.

The winding device 1000 further includes a second separator cut-off assembly 72. The second separator cut-off assembly 72 is located upstream of the winding mechanism 400 and located downstream of the third composite assembly 43, and is configured to cut off the first separator 92 and the second separator 94 before an electrode assembly 2000 is wound.

A working principle of the winding device 1000 is as follows:
The first electrode plate 91 and the first separator 92 are unwound, the first electrode plate 91 and the first separator 92 are composited together through the second composite assembly 42 to form a second composite plate body. The second composite plate body, the second electrode plate 93, and the second separator 94 are then composited by the third composite assembly 43 to form the electrode assembly 2000. The electrode assembly 2000 then passes through the second separator cut-off assemblies 72 to cut off the first separator 92 and the second separator 94. The cut-off electrode assembly 2000 is wound on the winding needles 10.

After the first winding needle 10 winds the electrode assembly 2000, the winding needle 10 moves along with the base 50 to the finishing structure. The finishing structure performs finishing processing on the electrode assembly 2000 on the winding needle 10, thereby separating the separator and reducing the possibility of the electrode assembly 2000 spreading out. After the electrode assembly 2000 on the winding needle 10 is finished and unloaded, the winding needle 10 is left idle and is capable of moving along with the base 50 to one side of the first composite assembly 41 for the next winding, and so on.

In a third aspect, some embodiments of the present application provide a battery processing system, including the winding device 1000 provided in some embodiments of the second aspect. The battery manufacturing device is capable of winding an electrode assembly 2000 using the winding device 1000, which has high winding efficiency and thus high manufacturing efficiency.

Finally, it should be noted that, the above embodiments are merely used for describing the technical solution of the present application, instead of limiting the present application. Although the present application is described in detail with reference to the foregoing embodiments, those of ordinary skill in the art should understand that they can still make modifications on the technical solution recorded in the above embodiments, or perform equivalent replacements on all or a part of technical features thereof; these modifications or replacements are not intended to make the essences of the corresponding technical solutions depart from the scope of the technical solutions of the embodiments of the present application, and they should all be encompassed within the scope of the claims and specification of the present application. In particular, the technical features mentioned in the various embodiments can be combined in any manner as long as there is no structural conflict. The present application is not limited to the particular Examples disclosed herein, but rather includes all technical solutions falling within the scope of the claims.

## Claims

1. A winding needle, comprising:
an inner needle;
at least two outer needles surrounding the inner needle in a circumferential direction of the inner needle, the outer needles being movably arranged on a circumferential side of the inner needle in a radial direction of the inner needle; and
a first structural member abutting against the outer needles, the first structural member being capable of moving relative to the outer needles in an axial direction of the inner needle to push the outer needles away from the inner needle in the radial direction of the inner needle.

2. The winding needle according to claim 1, wherein the winding needle further comprises an elastic member arranged within the winding needle, one end of the elastic member is connected to one of the outer needles, the other end of the elastic member is capable of being connected to the inner needle or another of the outer needles, and the elastic member is configured to apply, to the outer needles, a force pointing to the inner needle.

3. The winding needle according to claim 1 or 2, wherein the first structural member comprises a first slope, the first slope is inclined relative to an axis of the inner needle and forms a first included angle with the axis of the inner needle, and the first slope abuts against the outer needles so that the outer needles are capable of moving relative to the first structural member along the first slope.

4. The winding needle according to claim 3, wherein an angle range of the first included angle is 40° to 50°.

5. The winding needle according to claim 3 or 4, wherein a length range of the first slope is 3 mm to 5 mm.

6. The winding needle according to any one of claims 3 to 5, wherein the winding needle further comprises a second structural member, the second structural member and the first structural member are respectively arranged at two opposite ends of the inner needle in the axial direction of the inner needle, and the second structural member abuts against the outer needles at least in the axial direction of the inner needle; and
the first structural member is capable of moving relative to the second structural member in the axial direction of the inner needle.

7. The winding needle according to claim 6, wherein the second structural member comprises a second slope, the second slope abuts against the outer needles, and a second included angle is formed between the second slope and the axis of the inner needle; and
a projection of an intersection between a plane containing the second slope and a plane containing the first slope in the radial direction of the inner needle is within a middle region of the inner needle.

8. The winding needle according to claim 7, wherein the second included angle is equal to the first included angle.

9. The winding needle according to claim 7 or 8, wherein the outer needles are each provided with two third structural members, the two third structural members are arranged at both ends of the outer needle in the axial direction of the inner needle, and the two third structural members abut against the first structural member and the second structural member, respectively.

10. The winding needle according to claim 9, wherein the two third structural members each comprise a third slope, one of the two third slopes is parallel to an adjacent first slope and abuts against the first slope, and the other of the two third slopes is parallel to an adjacent second slope and abuts against the second slope.

11. The winding needle according to any one of claims 1 to 10, wherein the first structural member is fixedly connected to the inner needle; and
the winding needle further comprises a driving assembly, and the driving assembly is configured to drive the inner needle to move in the axial direction of the inner needle, so as to push the outer needles away from the inner needle in the radial direction of the inner needle by means of the first structural member.

12. The winding needle according to any one of claims 1 to 11, wherein an air intake hole is provided on the outer needle; and
at least two of the outer needles are capable of enclosing an airflow space, the airflow space is in communication with the air intake hole, and the airflow space is configured to be in communication with an air extraction apparatus to form a negative pressure in the airflow space.

13. The winding needle according to claim 12, wherein there are at least two air intake holes, and the at least two air intake holes are evenly distributed on the outer needle.

14. The winding needle according to claim 13, wherein an aperture range of the air intake hole is 1 mm to 2 mm, and a distance between two adjacent air intake holes is 2 mm to 4 mm.

15. The winding needle according to any one of claims 12 to 14, wherein a range of the negative pressure is -50 KPa to - 75 KPa.

16. The winding needle according to any one of claims 12 to 15, wherein an airflow channel in communication with the airflow space is opened in the inner needle, and one end of the airflow channel is used to be in communication with the air extraction apparatus so as to extract gas in the airflow space through the airflow channel to the outside of the winding needle.

17. The winding needle according to claim 12, wherein the outer needles each comprise a middle portion, and both ends of the middle portion are connected to end portions in the axial direction of the inner needle, with the end portions abutting against the first structural member; and
the air intake hole is at least opened in the middle portion, and the airflow space is at least formed between the middle portions of different outer needles.

18. The winding needle according to claim 17, wherein a thickness range of the middle portion is 5 mm to 8 mm.

19. The winding needle according to claim 17 or 18, wherein the end portion is detachably connected to the middle portion.

20. The winding needle according to any one of claims 1 to 19, wherein an unloading groove is further provided on a circumferential side surface of the outer needle; and
in the axial direction of the inner needle, at least one end of the unloading groove is in communication with the space outside the winding needle.

21. A winding device, comprising the winding needle according to any one of claims 1 to 20.

22. The winding device according to claim 21, further comprising:
a first unwinding mechanism configured to unwind a first electrode plate, a first separator, and a second electrode plate;
a second unwinding mechanism configured to unwind a second separator;
a composite mechanism configured to at least press the first electrode plate and the first separator together; and
a winding mechanism located downstream of the composite mechanism, the winding mechanism being configured to wind the first electrode plate, the first separator, the second electrode plate, and the second separator to form an electrode assembly.

23. The winding device according to claim 22, wherein the winding mechanism comprises a base and at least two winding needles, the winding needles are rotatably connected to the base, and the base is configured to drive different winding needles to move alternately to one side of the composite mechanism.

24. The winding device according to claim 22, wherein the first unwinding mechanism comprises:
a first unwinding assembly configured to unwind the first electrode plate; and
a second unwinding assembly configured to unwind the first separator; and
a third unwinding assembly configured to unwind the second electrode plate; and
the composite mechanism comprises a first composite assembly, and the first composite assembly is configured to press the first electrode plate, the first separator, and the second electrode plate together to form a first composite plate body.

25. The winding device according to claim 24, wherein the winding device further comprises:
a first electrode plate cut-off assembly arranged between the first unwinding assembly and the first composite assembly, the first electrode plate cut-off assembly being configured to cut off the first electrode plate; and
a second electrode plate cut-off assembly arranged between the third unwinding assembly and the first composite assembly, the second electrode plate cut-off assembly being configured to cut off the second electrode plate.

26. The winding device according to claim 24, wherein the second unwinding mechanism is arranged between the first composite assembly and the winding mechanism.

27. The winding device according to claim 26, wherein the second unwinding mechanism comprises a separator unwinding assembly and a conveying roller, the separator unwinding assembly is configured to unwind the second separator, and the conveying roller is configured to allow the second separator to be converged with the first composite plate body to form a laminated plate body, and to convey the laminated plate body to the winding mechanism.

28. The winding device according to any one of claims 24 to 27, wherein the second unwinding mechanism is arranged on one side of the winding mechanism, and the second unwinding mechanism is configured to convey the second separator to the winding needle so that the first composite plate body and the second separator are converged on the winding needle.

29. The winding device according to any one of claims 24 to 28, wherein the winding device further comprises a first separator cut-off assembly, and the first separator cut-off assembly is arranged adjacent to the winding mechanism and is configured to cut off the first separator and/or the second separator.

30. The winding device according to claim 22, wherein the first unwinding mechanism comprises:
a first unwinding assembly configured to unwind the first electrode plate; and
a second unwinding assembly configured to unwind the first separator; and
the composite mechanism comprises a second composite assembly, and the second composite assembly is configured to press the first electrode plate and the first separator together to form a second composite plate body.

31. The winding device according to claim 30, wherein the first unwinding mechanism further comprises a third unwinding assembly configured to unwind the second electrode plate; and
the composite mechanism further comprises a third composite assembly, and the third composite assembly is configured to press the second composite plate body, the second electrode plate, and the second separator together to form an electrode assembly.

32. The winding device according to claim 31, wherein the winding device further comprises:
a third electrode plate cut-off assembly arranged between the first unwinding assembly and the second composite assembly, the third electrode plate cut-off assembly being configured to cut off the first electrode plate; and
a fourth electrode plate cut-off assembly arranged between the third unwinding assembly and the third composite assembly, the fourth electrode plate cut-off assembly being configured to cut off the second electrode plate.

33. The winding device according to claim 31 or 32, wherein the winding device further comprises a second separator cut-off assembly, and the second separator cut-off assembly is arranged between the third composite assembly and the winding mechanism.

34. A battery processing system, comprising the winding device according to any one of claims 21 to 33.
